# EUROPEAN PATENT APPLICATION

(11) **EP 1 772 479 A1**
(43) Date of publication of application: **11.04.2007**
(21) Application number: 05108986.0
(22) Date of filing: 29.09.2005
(51) Int. Cl.: C08J 7/04, B05D 3/06, B05D 3/14, B05D 7/00, C09J 7/02

(54) **Silicon coated release substrate**

(71) Applicant: Ciba Specialty Chemicals Holding Inc., 4057 Basel (CH)
(72) Inventor: Hayoz, Pascal, 4114 Hofstetten (CH); Ilg, Stephan, 4304 Giebenach (CH); Telesca, Rosanna, 40037 Sasso Marconi (BO) (IT); Vogel, Thomas, 79576 Haltingen (DE)

(57) **Abstract**

Subject of the invention is a process for the preparation of a silicon release-layer on an inorganic or organic substrate, wherein a pretreated substrate is first covered with an adhesion promoting composition and subsequently a silicon and/or fluorine containing composition is applied as the top layer.

## Description

The invention pertains to material coated with silicon release layers as well as a process for the preparation of the same.

Radiation curable silicon-release layers are known in the art. A corresponding composition comprising a polyfunctional acrylate monomer, a reactive vinyl monomer, an organopolysiloxane and a photoinitiator is for example disclosed in US 5888649. Similar compositions are described for example in US 3726710, where defined organopolysiloxane compounds are admixed with a photo sensitizer, e.g. from the benzophenone type, and radiation cured to give the silicon release coating. Further silicon-release coatings are for example disclosed in US 5496635 and WO 02/06404. In WO 03/064061 a method for preparing strongly adhering coatings, e.g. UV-curable coatings or printing inks, by pretreating the substrate, is illustrated.

Up to date release coatings, in particular silicon release coatings, are coated directly on substrates like paper, e.g. supercalendered kraft (SCK) paper, glassine paper, polyethylene kraft (PK) paper, plastic coated paper; or plastic, e.g. polyethylene film, polypropylene film, polyester film, polyvinylchloride (PVC) film, with or without a pre-treatment of the substrate by corona discharge, plasma or flame. Said release layers typically have a thickness of 0.5 micron to 50 micron. The adhesion of the release layer on the substrates, especially on plastic, often is not sufficient and the layer has to be applied often in a certain quite high thickness, having unfavourable influence on the costs.

It has now been found that said drawbacks are overcome by modifying the substrate surface prior to the application of the expensive (silicon) release layer.
Subject of the invention is a process for the preparation of a silicon layer, in particular a silicon release layer, with improved adhesion on an inorganic or organic substrate, wherein
(a) the substrate is subjected to a plasma-, corona-, flame- or ozonization treatment;
(b) an adhesion promoting composition is applied to the inorganic or organic substrate, and
(c) using suitable methods the adhesion-promoting composition is optionally dried and is irradiated with electromagnetic waves to form an adhesion layer, and
(d) a silicon and/or fluorine containing composition, optionally diluted in a solvent, is applied on top of the adhesion layer to form a release layer, and the release layer is optionally dried and/or treated thermally and/or with electromagnetic waves.

In particular interesting is a process, wherein the adhesion promoting composition in step (b) comprises one or more photoinitiators, or mixtures of photoinitiator(s) with monomer(s) or/and oligomer(s) containing at least one ethylenically unsaturated group, or solutions, suspensions or emulsions of the afore-mentioned substances

Another subject of the invention is a coated material, comprising
(i) a plasma-, corona-, flame- or ozonization-pre-treated organic or inorganic substrate,
(ii) as a first layer an adhesion layer, obtained by radiation curing a composition comprising one or more photoinitiators, or mixtures of photoinitiators with monomers or/and oligomers containing at least one ethylenically unsaturated group; and
(iii) as a second layer a silicon and/or fluorine containing layer.

In the process according to the present invention the substrate is first treated with plasma-, corona-, flame- or ozonization.
Possible ways of obtaining plasmas under vacuum conditions have been described frequently in the literature. The electrical energy can be coupled in by inductive or capacitive means. It may be direct current or alternating current; the frequency of the alternating current may range from a few kHz up into the MHz range. A power supply in the microwave range (GHz) is also possible. The principles of plasma production and maintenance are described, for example, in the review article by H. Suhr mentioned above.
As primary plasma gases it is possible to use, for example, He, Ar, Xe, N₂, O₂, H₂, CO₂, steam or air. The process according to the invention is not sensitive per se in respect of the coupling-in of the electrical energy. The process can be carried out batch wise, for example in a rotating drum, or continuously in the case of films, fibres or woven fabrics. Such methods are known and are described in the prior art.
The process can also be carried out under corona discharge conditions. Corona discharges are produced under normal pressure conditions, the ionised gas used being most frequently air. In principle, however, other gases and mixtures are also possible, as described, for example, in COATING Vol. 2001, No. 12, 426, (2001). The advantage of air as ionisation gas in corona discharges is that the operation can be carried out in an apparatus open to the outside and, for example, a film can be drawn through continuously between the discharge electrodes. Such process arrangements are known and are described, for example, in J. Adhesion Sci. Technol. Vol. 7, No. 10, 1105, (1993). Three-dimensional work pieces can be treated with a plasma jet, the contours, for example, being followed with the assistance of robots.
The flame treatment of substrates is known to the person skilled in the art. Corresponding industrial apparatus, for example for the flame treatment of films, is commercially available. In such a treatment, a film is conveyed on a cooled cylindrical roller past the flame-treatment apparatus, which consists of a chain of burners arranged in parallel, usually along the entire length of the cylindrical roller. Details can be found in the brochures of the manufacturers of flame-treatment apparatus (e.g. esse Cl, flame treaters, Italy). The parameters to be chosen are governed by the particular substrate to be treated. For example, the flame temperatures, the flame intensity, the dwell times, the distance between substrate and burner, the nature of the combustion gas, air pressure, humidity, are matched to the substrate in question. As flame gases it is possible to use, for example, methane, propane, butane or a mixture of 70 % butane and 30 % propane.
The ozonization procedure is known to the person skilled in the art and for example described in Ullmans Encyclopedia of Industrial Research, Wiley-VCH Verlag GmbH 2002, chapter "Ozone"; or by R.N. Jagtap, Popular Plastics and Packaging, August 2004.

In the process according to the invention in step a) a corona treatment is preferred or the release coated substrate according to the invention is preferably pre-treated by corona discharge, respectively.

The plasma treatment of the inorganic or organic substrate in step a) preferably takes place for from 1 ms to 300 s, especially from 10 ms to 200 s.
The process according to the invention can be carried out within a wide pressure range, the discharge characteristics shifting as the pressure increases from a pure low-temperature plasma towards a corona discharge and finally changing into a pure corona discharge at an atmospheric pressure of about 1000-1100 mbar.
The process is preferably carried out at a process pressure of from 10⁻⁶ mbar up to atmospheric pressure (1013 mbar), especially in the range of from 10⁻⁴ to 10⁻² mbar as a plasma process and at atmospheric pressure as a corona process. The flame treatment is usually carried out at atmospheric pressure.
The process is preferably carried out using as the plasma gas an inert gas or a mixture of an inert gas with a reactive gas in step a).
When a corona discharge is used, air, CO₂ and/or nitrogen are preferably used as the gas.

It is especially preferred to use air, H₂, CO₂, He, Ar, Kr, Xe, N₂, O₂ or H₂O singly or in the form of a mixture.

The inorganic or organic substrate to be treated can be in any solid form. The substrate is for example in the form of a woven fabric, a fibre, a film or a three-dimensional work piece. The substrate may be, for example, a thermoplastic, elastomeric, inherently crosslinked or crosslinked polymer, paper, a metal, a metal oxide, a ceramic material, glass, leather or textile.

The pre-treatment of the substrate in the form of plasma-, corona- or flame-treatment can, for example, be carried out immediately after the extrusion of a fibre or film, and also directly after film-drawing.
The substrate can optionally be chemically or physically pre-treated prior to the process steps of the invention, e.g. by corona, plasma or flame by the provider. Advantageously, such substrates are again treated by corona plasma or flame before applying the formulation according to step b) of the process according to the invention. That is, irrespective of a previous treatment of the substrate, e.g. by the provider, all steps a)-d) of the process according to the invention are carried out.

The inorganic or organic substrate is for example paper, paper coated or laminated with an organic layer, a thermoplastic, elastomeric, inherently crosslinked or crosslinked polymer, a ceramic material or a glass, or metal, especially a thermoplastic, elastomeric, inherently crosslinked or crosslinked polymer or paper, paper coated or laminated with an organic layer and substrates used especially in the silicon release industry known to the person skilled in the art.
All the substrates described below are used as bulk material, or are used as material for the top layer of multilayer or multicomponent products.
Examples of thermoplastic, elastomeric, inherently crosslinked or crosslinked polymers are listed below.
1. Polymers of mono- and di-olefins, for example polypropylene, for example biaxial oriented polypropylene (BOPP), polyisobutylene, polybutene-1, poly-4-methylpentene-1, polyisoprene or polybutadiene and also polymerisates of cyclo-olefins, for example of cyclopentene or norbornene; and also polyethylene (which may optionally be crosslinked), for example high density polyethylene (HDPE), high density polyethylene of high molecular weight (HDPE-HMW), high density polyethylene of ultra-high molecular weight (HDPE-UHMW), medium density polyethylene (MDPE), low density polyethylene (LDPE), and linear low density polyethylene (LLDPE), (VLDPE) and (ULDPE).
   Polyolefins, that is to say polymers of mono-olefins, as mentioned by way of example in the preceding paragraph, especially polyethylene and polypropylene, can be prepared by various processes, especially by the following methods:
   a) by free radical polymerisation (usually at high pressure and high temperature);
   b) by means of a catalyst, the catalyst usually containing one or more metals of group IVb, Vb, VIb or VIII. Those metals generally have one or more ligands, such as oxides, halides, alcoholates, esters, ethers, amines, alkyls, alkenyls and/or aryls, which may be either π- or σ-coordinated. Such metal complexes may be free or fixed to carriers, for example to activated magnesium chloride, titanium(III) chloride, aluminium oxide or silicon oxide. Such catalysts may be soluble or insoluble in the polymerisation medium. The catalysts can be active as such in the polymerisation or further activators may be used, for example metal alkyls, metal hydrides, metal alkyl halides, metal alkyl oxides or metal alkyl oxanes, the metals being elements of group(s) la, IIa and/or IIIa. The activators may have been modified, for example, with further ester, ether, amine or silyl ether groups. Such catalyst systems are usually referred to as Phillips, Standard Oil Indiana, Ziegler (-Natta), TNZ (DuPont), metallocene or Single Site Catalysts (SSC).
2. Mixtures of the polymers mentioned under 1), for example mixtures of polypropylene with polyisobutylene, polypropylene with polyethylene (for example PP/HDPE, PP/LDPE) and mixtures of different types of polyethylene (for example LDPE/HDPE).
3. Copolymers of mono- and di-olefins with one another or with other vinyl monomers, for example ethylene/propylene copolymers, linear low density polyethylene (LLDPE) and mixtures thereof with low density polyethylene (LDPE), propylene/butene-1 copolymers, propylene/isobutylene copolymers, ethylene/butene-1 copolymers, ethylene/hexene copolymers, ethylene/methylpentene copolymers, ethylene/heptene copolymers, ethylene/octene copolymers, propylene/butadiene copolymers, isobutylene/isoprene copolymers, ethylene/alkyl acrylate copolymers, ethylene/alkyl methacrylate copolymers, ethylene/vinyl acetate copolymers and copolymers thereof with carbon monoxide, or ethylene/acrylic acid copolymers and salts thereof (ionomers), and also terpolymers of ethylene with propylene and a diene, such as hexadiene, dicyclopentadiene or ethylidenenorbornene; and also mixtures of such copolymers with one another or with polymers mentioned under 1), for example polypropyleneethylene/propylene copolymers, LDPE-ethylene/vinyl acetate copolymers, LDPE-ethylene/acrylic acid copolymers, LLDPE-ethylene/vinyl acetate copolymers, LLDPE-ethylene/acrylic acid copolymers and alternately or randomly structured polyalkylene-carbon monoxide copolymers and mixtures thereof with other polymers, for example polyamides.
4. Hydrocarbon resins (for example C₅-C₉) including hydrogenated modifications thereof (for example tackifier resins) and mixtures of polyalkylenes and starch.
5. Polystyrene, poly(p-methylstyrene), poly(α-methylstyrene).
6. Copolymers of styrene or α-methylstyrene with dienes or acrylic derivatives, for example styrene/butadiene, styrene/acrylonitrile, styrene/alkyl methacrylate, styrene/butadiene/alkyl acrylate and methacrylate, styrene/maleic anhydride, styrene/acrylonitrile/methyl acrylate; high-impact-strength mixtures consisting of styrene copolymers and another polymer, for example a polyacrylate, a diene polymer or an ethylene/propylene/diene terpolymer; and also block copolymers of styrene, for example styrene/butadiene/styrene, styrene/isoprene/styrene, styrene/ethylene-butylene/styrene or styrene/ethylene-propylene/styrene.
7. Graft copolymers of styrene or α-methylstyrene, for example styrene on polybutadiene, styrene on polybutadiene/styrene or polybutadiene/acrylonitrile copolymers, styrene and acrylonitrile (or methacrylonitrile) on polybutadiene; styrene, acrylonitrile and methyl methacrylate on polybutadiene; styrene and maleic anhydride on polybutadiene; styrene, acrylonitrile and maleic anhydride or maleic acid imide on polybutadiene; styrene and maleic acid imide on polybutadiene, styrene and alkyl acrylates or alkyl methacrylates on polybutadiene, styrene and acrylonitrile on ethylene/propylene/diene terpolymers, styrene and acrylonitrile on polyalkyl acrylates or polyalkyl methacrylates, styrene and acrylonitrile on acrylate/butadiene copolymers, and mixtures thereof with the copolymers mentioned under 6), such as those known, for example, as so-called ABS, MBS, ASA or AES polymers.
8. Halogen-containing polymers, for example polychloroprene, chlorinated rubber, chlorinated and brominated copolymer of isobutylene/isoprene (halobutyl rubber), chlorinated or chlorosulfonated polyethylene, copolymers of ethylene and chlorinated ethylene, epichlorohydrin homo- and co-polymers, especially polymers of halogen-containing vinyl compounds, for example polyvinyl chloride, polyvinylidene chloride, polyvinyl fluoride, polyvinylidene fluoride; and copolymers thereof, such as vinyl chloride/vinylidene chloride, vinyl chloride/vinyl acetate or vinylidene chloride/vinyl acetate.
9. Polymers derived from α,β-unsaturated acids and derivatives thereof, such as polyacrylates and polymethacrylates, or polymethyl methacrylates, polyacrylamides and polyacrylonitriles impact-resistant-modified with butyl acrylate.
10. Copolymers of the monomers mentioned under 9) with one another or with other unsaturated monomers, for example acrylonitrile/butadiene copolymers, acrylonitrile/alkyl acrylate copolymers, acrylonitrile/alkoxyalkyl acrylate copolymers, acrylonitrile/vinyl halide copolymers or acrylonitrile/alkyl methacrylate/butadiene terpolymers.
11. Polymers derived from unsaturated alcohols and amines or their acyl derivatives or acetals, such as polyvinyl alcohol, polyvinyl acetate, stearate, benzoate or maleate, polyvinylbutyral, polyallyl phthalate, polyallylmelamine; and the copolymers thereof with olefins mentioned in Point 1.
12. Homo- and co-polymers of cyclic ethers, such as polyalkylene glycols, polyethylene oxide, polypropylene oxide or copolymers thereof with bisglycidyl ethers.
13. Polyacetals, such as polyoxymethylene, and also those polyoxymethylenes which contain comonomers, for example ethylene oxide; polyacetals modified with thermoplastic polyurethanes, acrylates or MBS.
14. Polyphenylene oxides and sulfides and mixtures thereof with styrene polymers or polyamides.
15. Polyurethanes derived from polyethers, polyesters and polybutadienes having terminal hydroxyl groups on the one hand and aliphatic or aromatic polyisocyanates on the other hand, and their initial products.
16. Polyamides and copolyamides derived from diamines and dicarboxylic acids and/or from aminocarboxylic acids or the corresponding lactams, such as polyamide 4, polyamide 6, polyamide 6/6, 6/10, 6/9, 6/12, 4/6, 12/12, polyamide 11, polyamide 12, aromatic polyamides derived from m-xylene, diamine and adipic acid; polyamides prepared from hexamethylenediamine and iso- and/or tere-phthalic acid and optionally an elastomer as modifier, for example poly-2,4,4-trimethylhexamethylene terephthalamide or poly-m-phenylene isophthalamide. Block copolymers of the above-mentioned polyamides with polyolefins, olefin copolymers, ionomers or chemically bonded or grafted elastomers; or with polyethers, for example with polyethylene glycol, polypropylene glycol or polytetramethylene glycol. Also polyamides or copolyamides modified with EPDM or ABS; and polyamides condensed during processing ("RIM polyamide systems").
17. Polyureas, polyimides, polyamide imides, polyether imides, polyester imides, polyhydantoins and polybenzimidazoles.
18. Polyesters derived from dicarboxylic acids and dialcohols and/or from hydroxycarboxylic acids or the corresponding lactones, such as polyethylene terephthalate, polybutylene terephthalate, poly-1,4-dimethylolcyclohexane terephthalate, polyhydroxybenzoates, and also block polyether esters derived from polyethers with hydroxyl terminal groups; and also polyesters modified with polycarbonates or MBS.
19. Polycarbonates and polyester carbonates.
20. Polysulfones, polyether sulfones and polyether ketones.
21. Crosslinked polymers derived from aldehydes on the one hand and phenols, urea or melamine on the other hand, such as phenol-formaldehyde, urea-formaldehyde and melamine-formaldehyde resins.
22. Drying and non-drying alkyd resins.
23. Unsaturated polyester resins derived from copolyesters of saturated and unsaturated dicarboxylic acids with polyhydric alcohols, and also vinyl compounds as crosslinking agents, and also the halogen-containing, difficultly combustible modifications thereof.
24. Crosslinkable acrylic resins derived from substituted acrylic esters, e.g. from epoxy acrylates, urethane acrylates or polyester acrylates.
25. Alkyd resins, polyester resins and acrylate resins that are crosslinked with melamine resins, urea resins, isocyanates, isocyanurates, polyisocyanates or epoxy resins.
26. Crosslinked epoxy resins derived from aliphatic, cycloaliphatic, heterocyclic or aromatic glycidyl compounds, e.g. products of bisphenol-A diglycidyl ethers, bisphenol-F diglycidyl ethers, that are crosslinked using customary hardeners, e.g. anhydrides or amines with or without accelerators.
27. Natural polymers, such as cellulose, natural rubber, gelatine, or polymer-homologously chemically modified derivatives thereof, such as cellulose acetates, propionates and butyrates, and the cellulose ethers, such as methyl cellulose; and also colophonium resins and derivatives.
28. Mixtures (polyblends) of the afore-mentioned polymers, for example PP/EPDM, polyamide/EPDM or ABS, PVC/EVA, PVC/ABS, PVC/MBS, PC/ABS, PBTP/ABS, PC/ASA, PC/PBT, PVC/CPE, PVC/acrylates, POM/thermoplastic PUR, PC/thermoplastic PUR, POM/acrylate, POM/MBS, PPO/HIPS, PPO/PA 6.6 and copolymers, PA/HDPE, PA/PP, PA/PPO, PBT/PC/ABS or PBT/PET/PC.
   The substrate can be a pure compound or a mixture of compounds containing at least one component as listed above.
   The substrate can also be a multilayer construction containing at least one of the components listed above obtained e.g. by coextrusion, coating, lamination, sputtering etc.
   The substrate can for example be one as used in the commercial printing area, sheet-fed- or web-printing, posters, calendars, forms, labels, wrapping foils, tapes, credit cards, furniture profiles, etc.. The substrate is not restricted to the use in the non-food area. The substrate may also be, for example, a material for use in the field of nutrition, e.g. as packaging for foodstuffs; cosmetics, medicaments, etc..
   Where substrates have been pre-treated according to processes of the invention it is also possible, for example, for substrates that usually have poor compatibility with one another to be adhesively bonded to one another or laminated.
   The substrates are preferably labels and films, e.g. published in catalogues or in the internet by producers like DOW, ExxonMobil, Avery Dennison, UCB, BASF, Innovia, Klocke Gruppe, Raflatac, Treofan etc.
   Within the context of the present invention, paper should also be understood as being an inherently crosslinked polymer, especially in the form of cardboard, which can additionally be coated with e.g. Teflon®. Such substrates are, for example, commercially available.
   In the context of the present invention the substrate preferably is paper [e.g. supercalenderedkraft (SCK) paper, glassine paper, polyethylene kraft (PK) paper, polymer coated paper], polymer (e.g. polyethylene, polypropylene, polyester, polyvinylchloride), glass, wood or metal; in particular the substrate is an organic substrate, such as for example paper, polymer coated paper or polymer; in particular paper, polymer coated paper or polymer in the form of films and/or fibers.

The thermoplastic, crosslinked or inherently crosslinked plastics is preferably a polyolefin, polyamide, polyacrylate, polycarbonate, polyester, polystyrene or an acrylic/melamine, alkyd or polyurethane surface-coating.
Polycarbonate, polyester, polyethylene and polypropylene are especially preferred as pure compounds or as main compounds of multilayer systems.
The plastics may be, for example, in the form of films, injection-moulded articles, extruded workpieces, fibres, felts or woven fabrics.

As inorganic substrates there come into consideration especially glass, ceramic materials, metal oxides and metals. They may be silicates and semi-metal or metal oxide glasses which are preferably in the form of layers or in the form of powders preferably having average particle diameters of from 10 nm to 2000 µm. The particles may be dense or porous. Examples of oxides and silicates are SiO₂, TiO₂, ZrO₂, MgO, NiO, WO₃, Al₂O₃, La₂O₃, silica gels, clays and zeolites. Preferred inorganic substrates, in addition to metals, are silica gels, aluminium oxide, titanium oxide and glass and mixtures thereof.

As metal substrates there come into consideration especially Fe, Al, Ti, Ni, Mo, Cr and steel alloys.

The adhesion promoting composition according to the present invention is a radically crosslinking irradiation curable formulation.

The photoinitiators to be used in the adhesion promoting composition are radical photoinitiators. Said initiators optionally comprise an unsaturated group. Examples for such compounds are benzophenone, benzophenone derivatives, such as 2,4,6-trimethylbenzophenone, 2-methylbenzophenone, 3-methylbenzophenone, 4-methylbenzophenone, 4,4'-dimethylbenzophenone, 2-methoxycarbonylbenzophenone, 4,4'-bis(chloromethyl)benzophenone, 4-chlorobenzophenone, 4-phenylbenzophenone, 3,3'-dimethyl-4-methoxy-benzophenone, [4-(4-methylphenylthio)phenyl]-phenylmethanone, methyl-2-benzoylbenzoate, 3-methyl-4'-phenylbenzophenone, 2,4,6-trimethyl-4'-phenylbenzophenone, 4,4'-bis(dimethylamino)benzophenone, 4,4'-bis(diethylamino)benzophenone, 4-methoxybenzophenone, 4,4'-dimethoxybenzophenone, 4,4'-dichlorobenzophenone, 4-(4-methylthiophenyl)-benzophenone, 3,3'-dimethyl-4-methoxybenzophenone, methyl-2-benzoylbenzoat, 4-(2-hydroxyethylthio)-benzophenone, 4-(4-tolylthio)benzophenone, 4-benzoyl-N,N,N-trimethylbenzolmethanaminiumchloride, 2-hydroxy-3-(4-benzoylphenoxy)-N,N,N-trimethyl-1-propanaminiumchloride monohydrate, 4-(13-acryloyl-1,4,7,10,13-pentaoxatridecyl)-benzophenone, 4-benzoyl-N,N-dimethyl-N-[2-(1-oxo-2-propenyl)oxy]ethyl-benzolmethanaminiumchloride; 2,2-dichloro-1-(4-phenoxyphenyl)-ethanone, 4,4'-bis(chloromethyl)-benzophenone, 4-methylbenzophenone, 2-methylbenzophenone, 3-methylbenzophenone, 4-chlorobenzophenone. Unsaturated aceto- and benzo-phenone derivatives are described, for example, in US 3 214 492, US 3 429 852, US 3 622 848 and US 4 304 895, for example 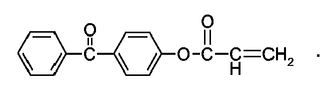 Also suitable, for example, are 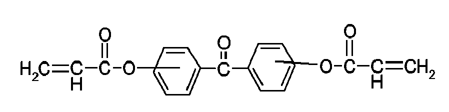 and further copolymerisable benzophenones, e.g. from UCB, Ebecryl P36 or in the form of Ebecryl P38 diluted in 30 % tripropylene glycol diacrylate; 4-vinyloxycarbonyloxybenzophenone, 4-vinyloxycarbonyloxy-4'-chlorobenzophenone, 4-vinyloxycarbonyloxy-4'-methoxybenzophenone, N-vinyloxycarbonyl-4-aminobenzophenone, vinyloxycarbonyloxy-4'-fluorobenzophenone, 2-vinyloxycarbonyloxy-4'-methoxybenzophenone, 2-vinyloxycarbonyloxy-5-fluoro-4'-chlorobenzophenone. Further examples of suitable photoinitiators are ketal and benzoinether compounds, as for example benzildimethylketal (IRGACURE® 651), 4-vinyloxycarbonyloxybenzil, 4-vinyloxycarbonyloxy-4'-methoxybenzil, vinyloxycarbonylbenzoin ether, 4-methoxybenzoinvinyloxycarbonyl ether; acetophenone, acetophenone derivatives, for example α-hydroxycycloalkyl phenyl ketones or 2-hydroxy-2-methyl-1-phenyl-propanone (DAROCUR® 1173), 1-hydroxy-cyclohexyl-phenyl-ketone (IRGACURE® 184), 1-(4-dodecylbenzoyl)-1-hydroxy-1-methyl-ethane, 1-(4-isopropylbenzoyl)-1-hydroxy-1-methylethane, 1-[4-(2-hydroxyethoxy)-phenyl]-2-hydroxy-2-methyl-1-propan-1-one (IR-GACURE^{®}2959); 2-hydroxy-1-{4-[4-(2-hydroxy-2-methyl-propionyl)-benzyl]-phenyl}-2-methylpropan-1-one (IRGACURE®127); 2-hydroxy-1-{4-[4-(2-hydroxy-2-methyl-propionyl)-phenoxy]-phenyl}-2-methyl-propan-1-one, 4-vinyloxycarbonyloxyacetophenone, 2-vinyloxycarbonyloxyacetophenone, N-vinyloxycarbonyl-4-aminoacetophenone, phenyl(2-vinyloxycarbonyloxy-2-propyl)-ketone, (4-isopropylphenyl)-(2-vinyloxycarbonyloxy-2-propyl)-ketone, phenyl-(1-vinyloxycarbonyloxy)-cyclohexyl ketone; dialkoxyacetophenones, α-hydroxy- or α-aminoacetophenones, e.g. (4-methylthiobenzoyl)-1-methyl-1-morpholinoethane (IRGACURE®907), (4-morpholinobenzoyl)-1-benzyl-1-dimethylaminopropane (IR-GACURE® 369), (4-morpholinobenzoyl)-1-(4-methylbenzyl)-1-dimethylaminopropane (IRGACURE® 379), (4-(2-hydroxyethyl)aminobenzoyl)-1-benzyl-1-dimethylaminopropane), (3,4-dimethoxybenzoyl)-1-benzyl-1-dimethylaminopropane; 4-aroyl-1,3-dioxolanes, benzoin alkyl ethers and benzil ketals, e.g. dimethyl benzil ketal, phenylglyoxalic esters and derivatives thereof, e.g. oxo-phenyl-acetic acid 2-(2-hydroxy-ethoxy)-ethyl ester, dimeric phenylglyoxalic esters, e.g. oxo-phenyl-acetic acid 1-methyl-2-[2-(2-oxo-2-phenyl-acetoxy)-propoxy]-ethyl ester (IRGACURE® 754); oximeesters, e.g. 1,2-octanedione 1-[4-(phenylthio)phenyl]-2-(O-benzoyloxime) (IRGACURE® OXE01), ethanone 1-[9-ethyl-6-(2-methylbenzoyl)-9H-carbazol-3-yl]-1-(O-acetyloxime) (IRGACURE® OXE02), 9H-thioxanthene-2-carboxaldehyde 9-oxo-2-(O-acetyloxime), peresters, e.g. benzophenone tetracarboxylic peresters as described for example in EP 126541, monoacyl phosphine oxides, e.g. (2,4,6-trimethylbenzoyl)-diphenylphosphine oxide(DAROCUR® TPO), ethyl (2,4,6 trimethylbenzoyl phenyl) phosphinic acid ester; bisacylphosphine oxides, e.g. bis(2,6-dimethoxy-benzoyl)-(2,4,4-trimethylpentyl)phosphine oxide, bis(2,4,6-trimethylbenzoyl)-phenylphosphine oxide (IRGACURE® 819), bis(2,4,6-trimethylbenzoyl)-2,4-dipentoxyphenylphosphine oxide, trisacylphosphine oxides, halomethyltriazines, e.g. 2-[2-(4-methoxy-phenyl)-vinyl]-4,6-bis-trichloromethyl-[1,3,5]triazine, 2-(4-methoxy-phenyl)-4,6-bis-trichloromethyl-[1,3,5]triazine, 2-(3,4-dimethoxyphenyl)-4,6-bis-trichloromethyl-[1,3,5]triazine, 2-methyl-4,6-bis-trichloromethyl-[1,3,5]triazine, hexaarylbisimidazole / coinitiators systems, e.g. ortho-chlorohexaphenyl-bisimidazole combined with 2-mercaptobenzthiazole; ferrocenium compounds, or titanocenes, e.g. bis(cyclopentadienyl)-bis(2,6-difluoro-3-pyrryl-phenyl)titanium (IRGACURE®784). Further, borate compounds can be used as coinitiators. Suitable further are thioxanthone, fluorenone and anthraquinone compounds and derivatives thereof, such as for example 2-chlorothioxanthone, 2,4-diethylthioxanthone, 2-isopropylthioxanthone, 3-isopropylthioxanthone, 1-chloro-4-propoxythioxanthone 2-vinyloxycarbonyloxy-9-fluorenone, 2-(N-vinyloxycarbonyl)-9-aminofluorenone, 2-vinylcarbonyloxymethylanthraquinone, 2-(N-vinyloxycarbonyl)-aminoanthraquinone, 2-vinyloxycarbonyloxythioxanthone, 3-vinylcarbonyloxythioxanthone or

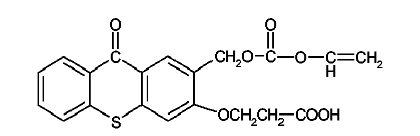

US 4 672 079 discloses *inter alia* the preparation of 2-hydroxy-2-methyl(4-vinylpropiophenone), 2-hydroxy-2-methyl-p-(1-methylvinyl)propiophenone, p-vinylbenzoylcyclohexanol, p-(1-methylvinyl)benzoyl-cyclohexanol.
Also suitable are the reaction products, described in JP Kokai Hei 2-292307, of 4-[2-hydroxyethoxy)-benzoyl]-1-hydroxy-1-methyl-ethane (IRGACURE^{®} 2959, Ciba Spezialitätenchemie) and isocyanates containing acryloyl or methacryloyl groups, for example 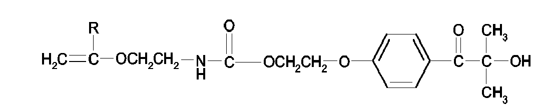 or 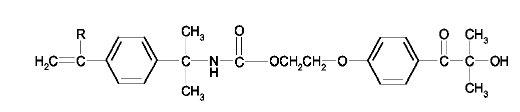 (wherein R= H or CH₃).

Further examples of suitable photoinitiators are 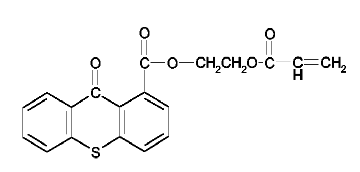 and

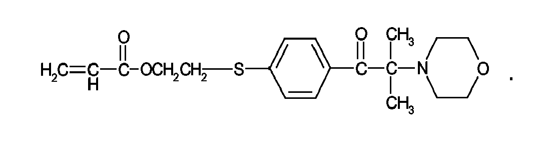

The following examples are described in Radcure '86, Conference Proceedings, 4-43 to 4-54 by W. Bäumer *et al.* 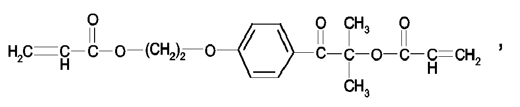 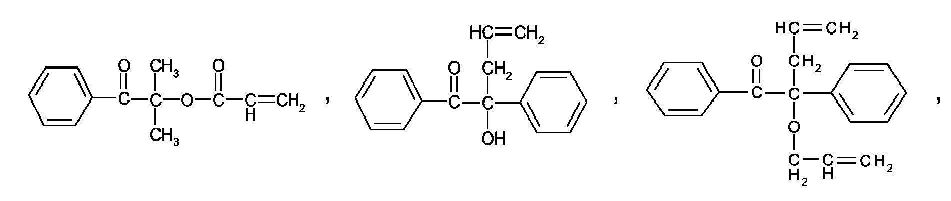 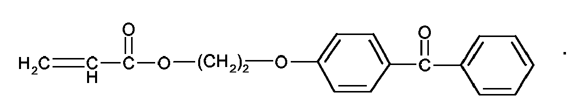 G. Wehner *et al.* report in Radtech '90 North America on 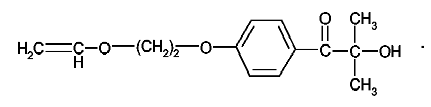 In the process according to the invention there are also suitable the compounds presented at RadTech 2002, North America 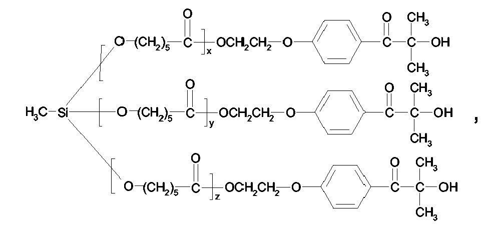 wherein x, y and z are an average of 3 (SIM-FPI2) and

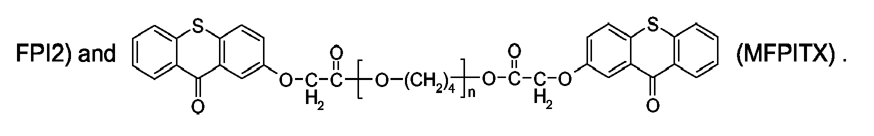

The preparation of such photoinitiator compounds is known to the person skilled in the art and has already been described in a large number of publications.

For example, compounds containing unsaturated groups can be prepared by reaction of 4-[2-hydroxyethoxy)-benzoyl]-1-hydroxy-1-methyl-ethane (IRGACURE^{®} 2959, Ciba Specialty Chemicals) with isocyanates containing acryloyl or methacryloyl groups or with other compounds containing acryloyl or methacryloyl groups, see e.g. US 4 922 004.

Many of the photoinitiators to be optionally used in combination with the photoinitiators of the formula I are commercially available, e.g. under the trademark IRGACURE (Ciba Specialty Chemicals), ESACURE (Fratelli Lamberti), LUCIRIN (BASF), VICURE (Stauffer), GENOCURE, QUANTACURE (Rahn/Great Lakes), SPEEDCURE (Lambsons), KAYACURE (Nippon Kayaku), CYRACURE (Union Carbide Corp.), DoubleCure (Double Bond), EBECRYL P (UCB), FIRSTCURE (First Chemical), etc..
Commercially available unsaturated photoinitiators are, for example, 4-(13-acryloyl-1,4,7,10,13-pentaoxatridecyl)-benzophenone, 4-chloro-2'-(11-acryloyl-2,5,8,11-tetraoxo-1-carboxy-undecyl)-ben-zophenone 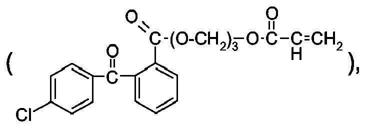 4-chloro-2'(1 0hydroxy-2,5,8-trioxo-1-carboxy)benzophen-one 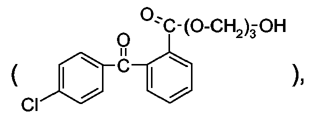 1,12-bis(4-chlorobenzophen-2'-yl)-1,12-dicarboxy-2,5,8,11-tetraoxo-dodecane 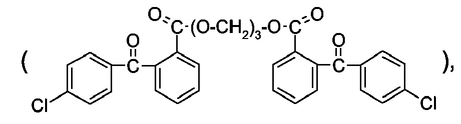 Uve cryl P36 from UCB, 4-benzoyl-N,N-dimethyl-N-[2-(1-oxo-2-propenyl)oxy]ethylphenylmethanaminium chloride (Quantacure ABQ from Great Lakes), and some copolymerisable unsaturated tertiary amines (Uvecryl P101, Uvecryl P104, Uvecryl P105, Uvecryl P115 from UCB Radcure Specialties) or copolymerisable aminoacrylates (Photomer 4116 and Photomer 4182 from Ackros; Laromer LR8812 from BASF; CN381 and CN386 from Cray Valley).

Further examples of suitable photoinitiators are α-hydroxy ketones, α-alkoxyketones or α-aminoketones of the formula (II), acylphosphine oxides of the formula (III), oxime esters of the formula (IV) and phenylglyoxalates of the formula (V): 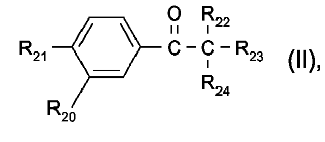 wherein
**R₂₀** is hydrogen or C₁-C₁₈alkoxy;
**R₂₁** is hydrogen, C₁-C₁₈-alkyl, C₁-C₁₂hydroxyalkyl ,C₁-C₁₈-alkoxy, -(OCH₂CH₂)_{y}-OR₂₅, morpholino, di(C₁-C₂₀alkyl)amino, H(C₁-C₂₀alkyl)amino, NH₂, OH, C₁-C₁₈alkyl-S-, a group 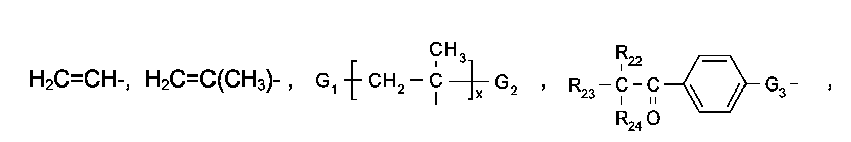 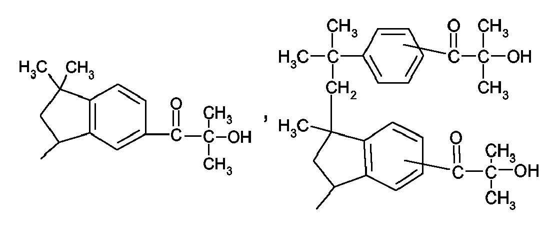 or 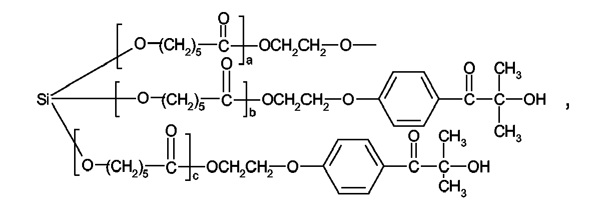 **R₂₂** is OH, C₁-C₁₆-alkoxy, morpholino, di(C₁-C₄alkyl)amino or -O(CH₂CH₂O)_{y}-C₁-C₁₆-alkyl;
**R₂₃** and **R₂₄** independently of one another are hydrogen, C₁-C₆-alkyl, C₁-C₁₆-alkoxy or -O(CH₂CH₂O)_{y}-C₁-C₁₆-alkyl; or unsubstituted phenyl or benzyl; or phenyl or benzyl substituted by C₁-C₁₂-alkyl; or R₂₃ and R₂₄ together with the carbon atom to which they are attached form a cyclohexyl ring;
**R₂₅** is hydrogen, 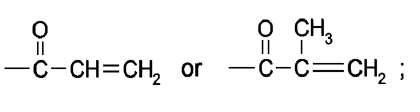 **a, b** and **c** are 1-3;
**x** is 2-10;
**y** is 1-20;
**G₁** and **G₂** independently of one another are end groups of the polymeric structure, preferably hydrogen or methyl;
**G₃** is O, CH₂ or CH-OH;
with the proviso that R₂₂, R₂₃ and R₂₄ not all together are C₁-C₁₆-alkoxy or -O(CH₂CH₂O)_{y}-C₁-C₁₆-alkyl; 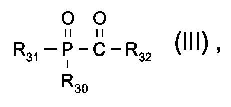 wherein
**R₃₀** and **R₃₁** independently of one another are C₁-C₂₀-alkyl; C₁-C₂₀-alkyl substituted by halogen and/or NR₃₃R₃₄; or R₃₀ and R₃₁ are phenyl-C₁-C₄alkyl, cyclohexyl, cyclopentyl, phenyl, naphthyl or biphenylyl; wherein the phenyl-C₁-C₄alkyl, cyclohexyl, cyclopentyl, phenyl, naphthyl or biphenylyl optionally are substituted by one or more halogen, C₁-C₁₂-alkyl, C₁-C₁₂-alkoxy, C₁-C₁₂alkylthio and/or NR₃₃R₃₄;
or R₃₀ and R₃₁ are independently of one another -(CO)R₃₅;
**R₃₂** and **R₃₅** independently of each other are cyclohexyl, cyclopentyl, phenyl, naphthyl or biphenylyl, wherein the cyclohexyl, cyclopentyl, phenyl, naphthyl or biphenylyl optionally are substituted by halogen, C₁-C₄-alkyl and/or C₁-C₄-alkoxy; or R₃₂ and R₃₅ represent a 5- or 6-membered heterocyclic ring comprising an S atom or N atom;
**R₃₃** and **R₃₄** independently of one another are hydrogen, unsubstituted C₁-C₁₂-alkyl or C₁-C₁₂-alkyl substituted by OH or SH, wherein the alkyl chain optionally is interrupted by one to four O atoms; or R₃₃ and R₃₄ independently of one another are C₂-C₁₂-alkenyl, cyclopentyl, cyclohexyl, benzyl or phenyl; 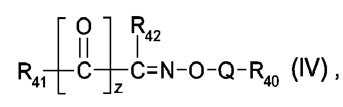 wherein
**Q** is CO or SO₂;
**z** is 0 or 1;
**R₄₀** is hydrogen, C₃-C₈cycloalkyl, C₂-C₅alkenyl, C₁-C₈alkoxy, benzyloxy; C₁-C₁₂alkyl which is unsubstituted or substituted by one or more halogen, phenyl and/or CN; or R₄₀ is phenyl which is unsubstituted or substituted by one or more C₁-C₆alkyl, halogen, CN, OR₄₃, SR₄₄ and/or NR₄₅R₄₆; or R₄₀ is phenoxy which is unsubstituted or substituted by one or more C₁-C₆alkyl and/or halogen;
**R₄₁** is phenyl, naphthyl, benzoyl or naphthoyl, each of which optionally is substituted 1 to 7 times by halogen, C₁-C₁₂alkyl, C₃-C₈cycloalkyl, benzyl, phenoxycarbonyl, C₂-C₁₂alkoxycarbonyl, OR₄₃, SR₄₄, SOR₄₄, SO₂R₄₄ and/or NR₄₅R₄₆, wherein the substituents OR₄₃, SR₄₄ and NR₄₅R₄₆ optionally form 5- or 6-membered rings *via* the radicals R₄₃, R₄₄, R₄₅ and/or R₄₆ with further substituents on the phenyl or naphthyl ring; or each of which is substituted by phenyl or by phenyl which is substituted by one or more OR₄₃, SR₄₄ and/or NR₄₅R₄₆; 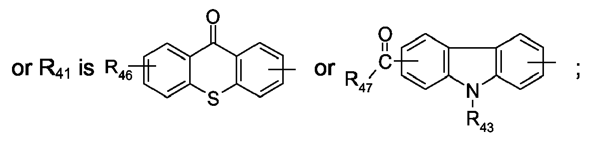 **R₄₂** is hydrogen, C₃-C₈cycloalkyl; C₁-C₂₀alkyl which is unsubstituted or substituted by one or more halogen, OR₄₃ or phenyl; or R₄₂ is phenyl which is unsubstituted or substituted by one or more C₁-C₆alkyl, phenyl, halogen, OR₄₃, SR₄₄ and/or NR₄₅R₄₆; or R₄₂ is C₂-C₂₀alkanoyl or benzoyl which is unsubstituted or substituted by one or more C₁-C₆alkyl, phenyl, OR₄₃, SR₄₄ and/or NR₄₅R₄₆; or is C₂-C₁₂alkoxycarbonyl, phenoxycarbonyl, CN, -CONR₄₅R₄₆, NO₂, C₁-C₄haloalkyl, S(O)_{q}-C₁-C₆alkyl; S(O)_{q}-phenyl,
**q** is 1 or 2;
**R₄₃** and **R₄₄** independently of one another are hydrogen, C₁-C₂₀alkyl, C₂-C₁₂alkenyl, C₃-C₈cycloalkyl, phenyl-C₁-C₃alkyl; or are C₁-C₈alkyl which is substituted by -OH, -SH, -CN, C₁-C₈alkanoyl; or are benzoyl, which is unsubstituted or substituted by one or more C₁-C₆alkyl, halogen, -OH, C₁-C₄alkoxy or C₁-C₄alkylsulfanyl; or are phenyl or naphthyl, each of which is unsubstituted or substituted by halogen, C₁-C₁₂alkyl, C₁-C₁₂alkoxy, phenyl-C₁-C₃alkyloxy, phenoxy, C₁-C₁₂alkylsulfanyl, phenylsulfanyl, -N(C₁-C₁₂alkyl)₂ or diphenylamino;
**R₄₅** and **R₄₆** independently of each other are hydrogen, C₁-C₂₀alkyl, C₂-C₄hydroxyalkyl, C₂-C₁₀alkoxyalkyl, C₂-C₅alkenyl, C₃-C₈cycloalkyl, phenyl-C₁-C₃alkyl, C₁-C₈alkanoyl, C₃-C₁₂-alkenoyl, benzoyl; or are phenyl or naphthyl, each of which is unsubstituted or substituted by one or more C₁-C₁₂alkyl, benzoyl or C₁-C₁₂alkoxy; or R₄₅ and R₄₆ together are C₂-C₆alkylene optionally interrupted by -O- or -NR₄₃- and/or optionally substituted by hydroxyl, C₁-C₄alkoxy, C₂-C₄alkanoyloxy or benzoyloxy;
**R₄₇** is C₁-C₁₂alkyl or phenyl which is unsubstituted or substituted by C₁-C₁₂alkyl, or NR₄₅R₄₆; 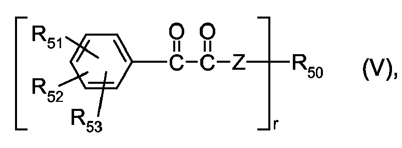 wherein
**r** is a number from 1 to 4;
**Z** is O, S or NR₅₄;
**R₅₀, when r is 1,** is hydrogen, C₁-C₅₀alkyl, C₂-C₂₄alkenyl, C₃-C₂₅cycloalkyl; C₂-C₂₅₀alkyl interrupted by one or more Z₂; C₂-C₂₄alkenyl interrupted by one or more Z₂; C₃-C₂₅cycloalkyl interrupted by one or more Z₂;
wherein said radicals C₁-C₅₀alkyl, C₂-C₂₄alkenyl, C₃-C₂₅cycloalkyl; C₂-C₂₅₀alkyl interrupted by one or more Z₂; C₂-C₂₄alkenyl interrupted by one or more Z₂; C₃-C₂₅cycloalkyl interrupted by one or more Z₂;optionally are substituted by one or more A;
or R₅₀ is phenyl, optionally substituted by A₁;
or, when Z is NR₅₄, R₅₄ and R₅₀ together with the N-atom optionally form a ring, besides the N-atom optionally comprising another group NR₅₄;
**R₅₀, when r is 2,** is a divalent linking group; in particular C₁-C₁₂alkylene interrupted by 1-5 O atoms,
**R₅₀, when r is 3,** is a trivalent linking group;
**R₅₀, when r is 4,** is a tetravalent linking group;
**A** is 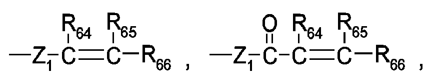 OR₅₈, SR₅₈, NR₅₉R₆₀, halogen; or A is unsubstituted phenyl, or phenyl substituted by one or more C₁-C₂₄alkyl, C₃-C₂₅cycloalkyl, C₂-C₂₄alkenyl, C₂-C₂₄alkinyl, phenyl, OR₅₈, SR₅₈, COR₅₈, COOR₅₈, OCOR₅₈, CON₅₉R₆₀,
OCONR₅₉R₆₀, 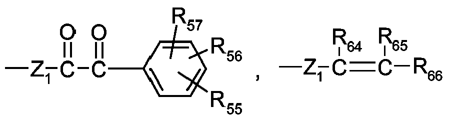 and/or 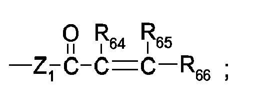 **A₁** is C₁-C₂₄alkyl, C₂-C₂₄alkyl interrupted by one or more Z₂; C₂-C₂₄alkenyl, C₂-C₂₄alkenyl interrupted by one or more Z₂; C₃-C₂₅cycloalkyl; C₃-C₂₅cycloalkyl interrupted by one or more Z₂; wherein said radicals C₁-C₂₄alkyl, C₂-C₂₄alkyl interrupted by one or more Z₂, C₂-C₂₄alkenyl; C₂-C₂₄alkenyl interrupted by one or more Z₂; C₃-C₂₅cycloalkyl; and C₃-C₂₅cycloalkyl interrupted by one or more Z₂; optionally are substituted by one or more C₂-C₂₄alkinyl, phenyl, OR₅₈, SR₅₈, -COR₅₈, COOR₅₈, 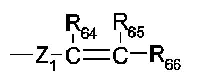 and/or 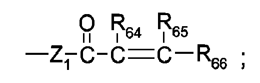 or A₁ is 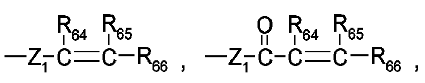 OR₅₈, SR₅₈, NR₅₉R₆₀, unsubstituted phenyl;
or A₁ is phenyl substituted by one or more C₁-C₂₄alkyl, C₂-C₂₄alkenyl, C₃-C₂₅cycloalkyl, C₂-C₂₄alkinyl, phenyl, OR₅₈, SR₅₈, COR₅₈, COOR₅₈, OCOR₅₈, CON₅₉R₆₀, OCONR₅₉R₆₀, 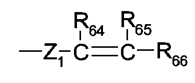 and/or 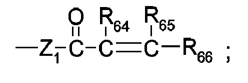 **R₅₁, R₅₂** and **R₅₃** independently of one another are hydrogen, halogen, CN, C₁-C₂₄alkyl, C₂-C₂₄alkyl interrupted by one or more Z₂; C₂-C₂₄alkenyl, C₂-C₂₄alkenyl interrupted by one or more Z₂; C₃-C₂₅cycloalkyl; C₃-C₂₅cycloalkyl interrupted by one or more Z₂; wherein said radicals C₁-C₂₄alkyl, C₂-C₂₄alkyl interrupted by one or more Z₂, C₂-C₂₄alkenyl, C₂-C₂₄alkenyl interrupted by one or more Z₂, C₃-C₂₅cycloalkyl, and C₃-C₂₅cycloalkyl interrupted by one or more Z₂; optionally are substituted by one or more C₂-C₂₄alkinyl, phenyl, halogen, OR₅₈, SR₅₈,
NR₅₉R₆₀, COR₅₈, COOR₅₈, OCOR₅₈, N(R₅₄)COR₅₈, CON(R₅₄)R₅₈, 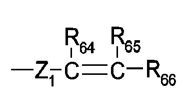 and/or 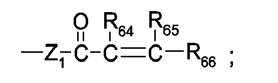 or R₅₁, R₅₂ and R₅₃ are 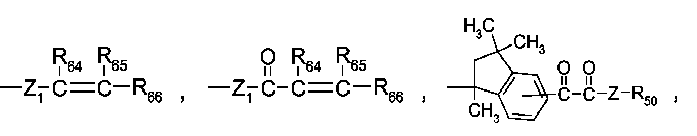 OR₅₈, SR₅₈, NR₅₉R₆₀, COR₅₈, COOR₅₈, OCOR₅₈, N(R₅₄)COR₅₈, CON(R₅₄)R₅₈; or are unsubstituted phenyl, or phenyl substituted by one or more OR₅₈, SR₅₈, NR₅₉R₆₀, COR₅₈, COOR₅₈, OCOR₅₈, N(R₅₄)COR₅₈, CONR₅₉R₆₀, OCONR₀₅₉R₆₀, C₁-C₂₄alkyl, C₂-C₂₄alkenyl, C₃-C₂₅cycloalkyl, C₂-C₂₄alkinyl, phenyl, 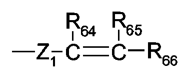 and/or 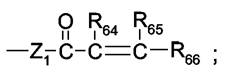 or R₅₁ and R₅₂ together form C₁-C₆alkylene or R₅₁ and R₅₂ together form a benzene ring that is condensed to the phenyl ring to which they are attached;
**R₅₄** has one of the meanings as given for R₅₀, when r is 1; or R₅₄ is 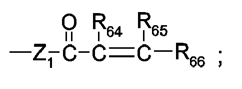 **Z₁** is a direct bond, O, S or NR₆₁;
**Z₂** is O, S, NR₆₁, CO, COO, OCO, CONR₆₁, NR₆₁CO, OCONR₆₁, NR₆₁COO, NR₆₁CONR₆₂,
SO, SO₂, CR₆₁=CR₆₂, C≡C , N=C-R₆₁, R₆₁C=N, 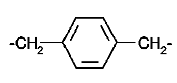 phenylene; or phenylene substituted by A₁;
**R₅₅, R₅₆** and **R₅₇** independently of one another have the same meanings as given for R₅₁, R₅₂ and R₅₃;
**R₅₈, R₅₉** and **R₆₀** independently of one another are hydrogen, C₁-C₂₄alkyl; C₂-C₂₄alkyl interrupted by one or more Z₂; C₂-C₂₄alkenyl; C₂-C₂₄alkenyl interrupted by one or more Z₂; C₃-C₂₅cycloalkyl; C₃-C₂₅cycloalkyl interrupted by one or more Z₂; wherein said radicals C₁-C₂₄alkyl; C₂-C₂₄alkyl interrupted by one or more Z₂; C₂-C₂₄alkenyl; C₂-C₂₄alkenyl interrupted by one or more Z₂; C₃-C₂₅cycloalkyl; and C₃-C₂₅cycloalkyl interrupted by one or more Z₂; optionally are substituted by one or more C₂-C₂₄alkinyl, phenyl, halogen, CN, OR₆₁, SR₆₁,
COR₆₁, COOR₆₁, 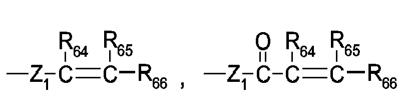 and/or 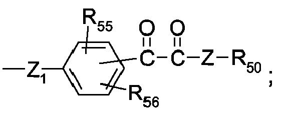 or R₅₈, R₅₉ and R₆₀ independently of one another are unsubstituted phenyl or phenyl substituted by one or more COR₆₁, COOR₆₁, OCOR₆₁, CONR₆₂R₆₃, OCONR₆₂R₆₃, C₁-C₂₄alkyl, C₂-C₂₄alkenyl, C₃-C₂₅cycloalkyl, C₂-C₂₄alkinyl, phenyl, OR₆₁, SR₆₁, 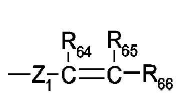 and/or 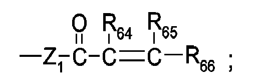 or R₅₈, R₅₉ and R₆₀ independently of one another are phenyl-C₁-C₄-alkyl substituted by one or more COR₆₁, COOR₆₁, OCOR₆₁, CONR₆₂R₆₃, OCONR₆₂R₆₃, C₁-C₂₄alkyl, C₃-C₂₅cycloalkyl, C₂-C₂₄alkenyl, C₂-C₂₄alkinyl, phenyl, OR₆₁, SR₆₁, 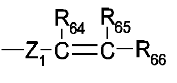 and/or 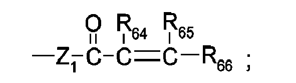 **R₆₁, R₆₂** and **R₆₃** independently of one another are hydrogen, phenyl, C₁-C₂₄alkyl; C₂-C₂₄alkyl, interrupted by one or more Z₃; C₂-C₂₄alkenyl; C₂-C₂₄alkenyl interrupted by one or more Z₃; C₃-C₂₅cycloalkyl; C₃-C₂₅cycloalkyl interrupted by one or more Z₃; wherein said radicals phenyl, C₁-C₂₄alkyl; C₂-C₂₄alkyl, interrupted by one or more Z₃; C₂-C₂₄alkenyl; C₂-C₂₄alkenyl interrupted by one or more Z₃; C₃-C₂₅cycloalkyl; and C₃-C₂₅cycloalkyl interrupted by one or more Z₃ optionally are substituted by one or more OH or halogen;
**Z₃** is O, S or NR₅₄; and
**R₆₄, R₆₅** and **R₆₆** independently of one another are hydrogen, C₁-C₂₄alkyl, CH₂-COOH, COOH, or phenyl.

Other suitable photoinitiators are such having silicon- or F-moieties in the molecule. Such compounds are known, being based on for example benzophenone, acetophenone, benzoin, ketal, phenylglyoxalate photoinitiator basic structures, that are modified with silicon- or F-containing chains. Suitable compounds of this type are for example disclosed in EP 1072326, WO 02/14439, WO 02/14326, WO 02/40602, WO 02/48202, WO 02/48203, WO 02/48204, WO 03766688, WO 03/66687 and WO 04/108799. A specific example is

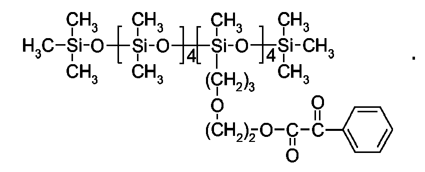

Another type of photoinitiators to be used in step (b) are for example titanocene photoinitators as are for example disclosed in EP 122223, US 4855468, EP 255486, EP 256981, EP 318894, EP 318893, EP 401165 and EP 401166. A specific example is bis(η⁵-2,4-cyclopentadien-1-yl)-bis[2,6-difluoro-3-(1H-pyrrol-1-yl)phenyl]titanium (IRGACURE^{®} 784).

Specific examples of the compounds of the formula (II)-(V) are 1-hydroxy-cyclohexyl-phenyl-ketone (IRGACURE^{®}184) or IRGACURE^{®} 500 (a mixture of IRGACURE^{®}184 with benzophenone), 2-methyl-1[4-(methylthio)phenyl]-2-morpholinopropan-1-one (IRGACURE^{®}907), 2-benzyl-2-dimethylamino-1-(4-morpholinophenyl)-butanone-1 (IRGACURE^{®}369), 2-dimethylamino-2-(4-methyl-benzyl)-1-(4-morpholin-4-yl-phenyl)-butan-1-one (IR-GACURE^{®}379), (3,4-dimethoxy-benzoyl)-1-benzyl-1-dimethylamino propane, 1-[4-(2-hydroxyethoxy)-phenyl]-2-hydroxy-2-methyl-1-propan-1-one (IRGACURE^{®}2959), 2,2-dimethoxy-1,2-diphenylethan-1-one (IRGACURE^{®}651), 2-hydroxy-2-methyl-1-phenyl-propan-1-one (DAROCUR^{®}1173); 2-hydroxy-1-{4-[4-(2-hydroxy-2-methyl-propionyl)-benzyl]-phenyl}-2-methyl-propan-1-one (IRGACURE^{®}127), 2-hydroxy-1-{4-[4-(2-hydroxy-2-methyl-propionyl)-phenoxy]-phenyl}-2-methyl-propan-1-one, 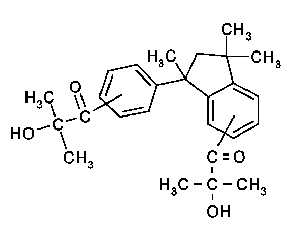 (ESACURE KIP provided by Fratelli Lamberti), 2-hydroxy-1-{1-[4-(2-hydroxy-2-methyl-propionyl)-phenyl]-1,3,3-trimethyl-indan-5-yl}-2-methyl-propan-1-one, oxo-phenyl-acetic acid 2-[2-(2-oxo-2-phenyl-acetoxy)-ethoxy]-ethyl ester (IRGACURE^{®}754), bis(2,4,6-trimethylbenzoyl)-phenylphosphine oxide (IRGACURE^{®}819), 2,4,6-trimethylbenzoyl-diphenyl-phosphine oxide (DAROCUR^{®} TPO), bis(2,6-dimethoxybenzoyl)-2,4,4-trimethylpentylphosphine oxide, bis(2,4,6-trimethylbenzoyl)-2,4,4-trimethylpentylphosphine oxide, 1,2-octanedione 1-[4-(phenylthio)phenyl]-2-(O-benzoyloxime) (IRGACURE^{®}OXE01); ethanone 1-[9-ethyl-6-(2-methylbenzoyl)-9H-carbazol-3-yl]-1-(O-acetyloxime) (IRGACURE^{®} OXE02), 9H-thioxanthene-2-carboxaldehyde 9-oxo-2-(O-acetyloxime), ethanone 1-[9-ethyl-6-(4morpholinobenzoyl)-9H-carbazol-3-yl]-1-(O-acetyloxime). IRGACURE^{®} and DAROCUR^{®} products are available from Ciba Specialty Chemicals Inc.
The photoinitiators that are suitable in the claimed process optionally, but not imperatively comprise an unsaturated moiety i.e. in the process according to the invention, in particular in step b), it is possible to use either saturated or unsaturated photoinitiators. In the process according to the invention it is of course also possible to employ mixtures of different photoinitiators, for example mixtures of saturated photoinitiators, mixtures of unsaturated photoinitiators, as well as mixtures of saturated and unsaturated photoinitiators.

The meanings of the substituents defined in formulae II, III, IV and V in the different radicals are explained in more detail below.

C₁-C₅₀alkyl is linear or branched and is, for example, C₁-C₂₄, C₁-C₁₈-, C₁-C₁₄-, C₁-C₁₂-, C₁-C₈-, C₁-C₆- or C₁-C₄alkyl. Examples are methyl, ethyl, propyl, isopropyl, n-butyl, sec-butyl, isobutyl, tert-butyl, pentyl, hexyl, heptyl, 2,4,4-trimethylpentyl, 2-ethylhexyl, octyl, nonyl, decyl, dodecyl, tetradecyl, pentadecyl, hexadecyl, octadecyl, icosyl, pentadecyl.
C₁-C₂₄alkyl, C₁-C₂₀alkyl, C₁-C₁₈alkyl, C₁-C₁₄alkyl, C₁-C₁₂alkyl, C₁-C₈alkyl, C₁-C₆alkyl and C₁-C₄alkyl have the same meanings as given above for C₁-C₅₀alkyl up to the corresponding number of C-atoms.
If alkyl is substituted one or more times by halogen or OH, then there are for example 1 to 3 or 1 or 2 halogen or OH substituents on the alkyl radical.

C₂-C₂₄alkenyl radicals are mono or polyunsaturated, linear or branched and are for example C₂-C₁₂-, C₂-C₁₀-, C₂-C₈-, C₂-C₆- or C₂-C₄alkenyl. Examples are allyl, methallyl, vinyl, 1,1-dimethylallyl, 1-butenyl, 3-butenyl, 2-butenyl, 1,3-pentadienyl, 5-hexenyl or 7-octenyl, especially allyl or vinyl.

C₁-C₂₀alkoxy is linear or branched and is for example C₁-C₁₈-, C₁-C₁₆-, C₁-C₁₂-, C₁-C₁₀-, C₁-C₈-, C₁-C₆- or C₁-C₄-alkoxy. Examples are methoxy, ethoxy, propoxy, isopropoxy, n-butyloxy, sec-butyloxy, iso-butyloxy, tert-butyloxy, pentyloxy, hexyloxy, heptyloxy, 2,4,4-trimethylpentyloxy, 2-ethylhexyloxy, octyloxy, nonyloxy, decyloxy, dodecyloxy, hexadecyloxy, octadecyloxy or icosyloxy, in particular methoxy, ethoxy, propoxy, isopropoxy, n-butyloxy, sec-butyloxy, iso-butyloxy, tert-butyloxy, especially methoxy. C₁-C₁₈-, C₁-C₁₆-, C₁-C₁₂-, C₁-C₁₀-, C₁-C₈-, C₁-C₆- and C₁-C₄-alkoxy also are linear or branched and have the same meanings as given above up to the corresponding number of C-atoms.
Di(C₁-C₂₀alkyl)amino represents a group 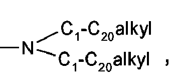 wherein C₁-C₂₀alkyl has a meaning as given above. Preferred is di(C₁-C₄alkyl)amino. H(C₁-C₂₀alkyl)amino represents a group 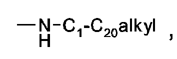 wherein C₁-C₂₀alkyl has a meaning as given above. Preferred is H(C₁-C₄alkyl)amino.

Halogen is fluorine, chlorine, bromine and iodine, especially fluorine, chlorine and bromine, preferably fluorine and chlorine.

C₃-C₂₅Cycloalkyl is for example C₄-C₁₂-, C₅-C₁₀cycloalkyl. Examples are cyclopropyl, cyclopentyl, cyclohexyl, cyclooctyl, cyclo-dodecyl, especially cyclopentyl and cyclohexyl, preferably cyclohexyl. C₃-C₂₅cycloalkyl in the context of the present application is to be also understood as alkyl which at least comprises one ring. For example methyl-cyclopentyl, methyl- or dimethylcyclohexyl, 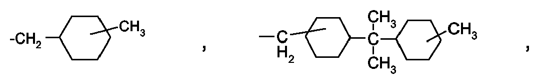 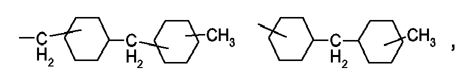 as well as bridged or fused ring systems, e.g. 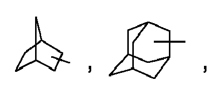 etc. are also meant to be covered by the term.

C₂-C₂₄alkinyl radicals are mono or polyunsaturated, linear or branched and are for example C₂-C₈-, C₂-C₆- or C₂-C₄alkinyl. Examples are ethinyl, propinyl, butinyl, 1-butinyl, 3-butinyl, 2-butinyl, pentinyl hexinyl, 2-hexinyl, 5-hexinyl, octinyl, etc.

Phenyl-C₁-C₄-alkyl is for example benzyl, phenylethyl, α-methylbenzyl, phenylbutyl, or α,α-dimethylbenzyl, especially benzyl.

Substituted phenyl is substituted one to four times, for example once, twice or three times, especially once. The substituents are for example in 2-, 3-, 4-, 2,4-, 2,6-, 2,3-, 2,5-, 2,4,6-, 2,3,4-, 2,3,5-position of the phenyl ring.

C₁-C₅₀alkylene, means C₁-C₅₀alkanediyl, e.g. C₁-C₂₅-, C₁-C₁₂-, C₁-C₈-, C₁-C₄alkylene. Said alkylene is linear or branched. Examples are methylene, ethylene, propylene, isopropylene, butylene, pentylene, hexylene, heptylene, 2,4,4-trimethylpentylene, 2-ethylhexylene, octylene, nonylene, decylene, dodecylene, tetradecylene, pentadecylene, hexadecylene, octadecylene, icosylene, pentadecylene. C₁-C₂₅-, C₁-C₁₂-, C₁-C₈-, C₁-C₄alkylene have the same meanings as given above for C₁-C₅₀alkylene up to the corresponding number of C-atoms. C₃-C₂₅Cycloalkylene (C₃-C₂₅Cycloalkyldiyl) is for example C₄-C₂₅-, C₄-C₁₂-, C₅-C₁₀cycloalkylene. Examples are cyclopropylene, cyclopentylene, cyclohexylene, cyclooctylene, cyclo-dodecylene, especially cyclopentylene and cyclohexylene, preferably cyclohexylen. C₃-C₂₅cycloalkylene in the context of the present application is to be also understood as alkylene (alkanediyl) which at least comprises one ring. For example methyl-cyclopentylene, methyl- or dimethylcyclohexylene, 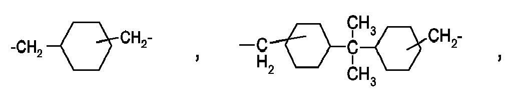 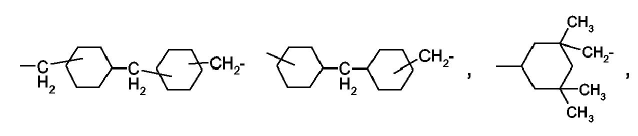 as well as bridged or fused ring systems, e.g. 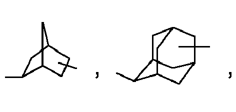 etc. are also meant to be covered by the term.
If in formula II R₂₃ and R₂₄ together with the carbon atom to which they are attached form a cyclohexyl ring the following structure is formed

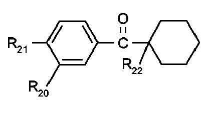

In formula III R₃₂ and R₃₅ preferably are phenyl substituted by one or more C₁-C₄alkyl, C₁-C₄alkoxy and/or halogen, in particular 2,4,6-trimethylphenyl, 2,6-dimethylphenyl or 2,6-dimethoxyphenyl. R₃₀ in particular is phenyl.
In the formula IV R₄₁ in particular is 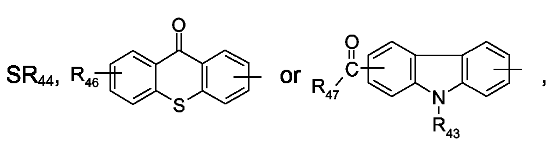 especially with R₄₄ denoting phenyl, R₄₆ denoting hydrogen, R₄₇ representing phenyl substituted by C₁-C₄alkyl or morpholino and R₄₃ denoting C₁-C₄alkyl, in particular ethyl. Q preferably is CO.

In formula V C₂-C₂₅₀alkyl interrupted by one or more Z₂, that is the alkyl is interrupted by O, S, NR₆₁, CO, COO, OCO, CONR₆₁, NR₆₁CO, OCONR₆₁, NR₆₁COO, NR₅₈COR₅₉, SO, SO₂, CR₆₁=CR₆₂, C≡C , N=C-R₆₁, R₆₁C=N, phenylene; and/or phenylene substituted by A₁, is for example, interrupted 1-125 times, for example 1-120, 1-100, 1-80, 1-60, 1-50, 1-30, 1-20, 1-15, 1-12, 1-7 times or once or twice. The alkyl is linear or branched. This produces structural units such as, for example, -CH₂-O-CH₂-, 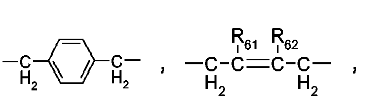 -CH₂-S-CH₂-, -CH₂-N(CH₃)-CH₂-, -CH₂CH₂-O-CH₂CH₂-, -[CH₂CH₂O]ₚ-, -[CH₂CH₂O]ₚ-CH₂-, where p = 1-60, -(CH₂CH₂O)₇CH₂CH₂-, -CH₂-CH(CH₃)-O-CH₂-CH(CH₃)- or -CH₂-CH(CH₃)-O-CH₂-CH₂CH₂-. Interrupting O-atoms are non-successive. If Z₂ is O the structural units for interrupted alkyl may also be derived from conventional polyethyleneglycols or polypropyleneglycols, or polytetrahydrofurane of diversified chain lengths. Preferred are such structures to be derived from commercially available polyethyleneglycols, polypropyleneglycols, and polytetrahydrofurane, with for example, MW up to 35000 for polyethyleneglycols, MW up to 35000 for polypropyleneglycols, and MW up to 50000 for polytetrahydrofurane.
Interrupted C₂-C₂₅₀alkyl is for example C₂-C₂₀₀-, C₂-C₁₈₀-, C₂-C₁₅₀-, C₂-C₁₂₅-, C₂-C₁₀₀-, C₂-C₈₀-, C₂-C₅₀-, C₂-C₂₄alkyl. C₂-C₂₀₀-, C₂-C₁₈₀-, C₂-C₁₅₀-, C₂-C₁₂₅-, C₂-C₁₀₀-, C₂-C₈₀-, C₂-C₅₀-, C₂-C₂₄alkyl interrupted by one or more Z₂ have the same meanings as given for C₂-C₂₅₀alkyl interrupted by one or more Z₂ up to the corresponding number of C-atoms.
Similar meanings apply for C₂-C₂₄alkyl interrupted by Z₃. If any of the definitions combined with one another lead to consecutive O-atoms, these should be considered excluded in the compounds of formula V in the context of the present application.
In formula V, C₂-C₂₄alkenyl interrupted by one or more Z₂ produces similar units as described for interrupted alkyl, wherein one or more alkylene units will be replaced by unsaturated units, that is, the interrupted alkenyl is mono- or polyunsaturated and linear or branched. Similar meanings apply for C₂-C₂₄alkenyl interrupted by Z₃.
In formula V, when Z is NR₅₄, R₅₄ and R₅₀ together with the N-atom optionally form a ring, besides the N-atom optionally comprising another group NR₅₄ for example the following structures are formed 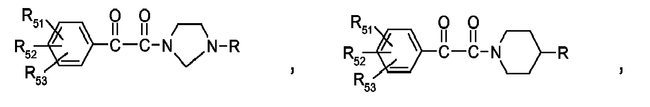 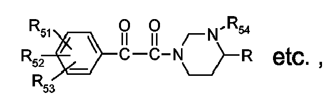 wherein R is for example a group A as defined above, R₅₁, R₅₂, R₅₃ are as defined above. If r is 2, for example bridging structures as 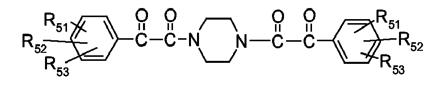 described by the above definition.
If, in formula V, R₅₁ and R₅₂ together form C₁-C₆alkylene or R₅₁ and R₅₂ together form a benzene ring that is condensed to the phenyl ring to which they are attached, for example structures of the following kind are encompassed 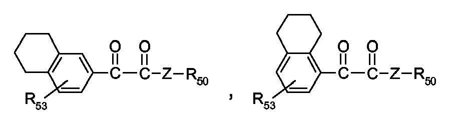 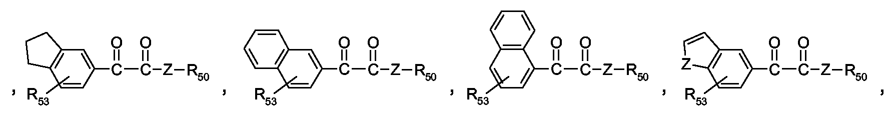 where R₅₃, Z and R₅₀ are as defined above.
In formula V, R₅₀ when r is 2, as a divalent linking group, for example is C₁-C₅₀alkylene; C₂-C₅₀alkylene interrupted by Z₂; C₂-C₅₀alkenylene; C₂-C₅₀alkenylene interrupted by Z₂; C₄-C₂₅cycloalkylene; C₃-C₂₅cycloalkylene interrupted by Z₂; phenylene, biphenylene, wherein said C₁-C₅₀alkylene; C₂-C₅₀alkylene interrupted by Z₂; C₂-C₅₀alkenylene; C₂-C₅₀alkenylene interrupted by Z₂; C₄-C₂₅cycloalkylene; C₃-C₂₅cycloalkylene interrupted by Z₂; phenylene and biphenylene optionally are substituted by one or more A₂;
or R₅₀, when r is 2 is L, CO-L-CO, 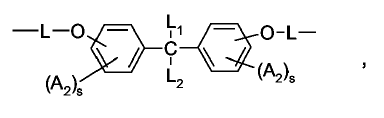 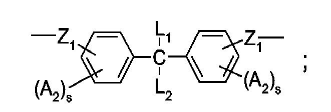 or R₅₀, when r is 2 and Z is NR₅₄, together with R₅₄ forms an aliphatic ring comprising the two N-atoms as heteroatoms;
s is an integer from 0 to 3, preferably 0 or 1, in particular 0;
L is C₂-C₂₅₀alkylene; C₂-C₂₅₀alkylene interrupted by O; wherein both C₂-C₂₅₀alkylene and C₂-C₂₅₀alkylene interrupted by O optionally are substituted by A₂;
L₁ and L₂ independently of each other are hydrogen or C₁-C₂₀alkyl, preferably H or C₁-C₄alkyl, in particular H or methyl;
A₂ is OR₅₈, SR₅₈, NR₅₉R₆₀, COOR₅₈, COR₅₈, OCOR₅₈, CONR₅₉R₆₀, OCONR₅₉R₆₀, CN, halogen, C₅-C₁₂cycloalkyl phenyl, phenyl-C₁-C₄alkyl; phenyl substituted by C₁-C₁₂alkyl, halogen, CN, OR₆₁, SR₆₁ or NR₆₂R₆₃; or A₂ is 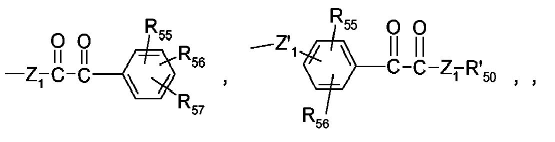 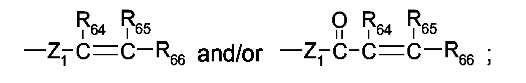 Z₂ has one of the meanings as given above;
R'₅₀ has one of the meanings given for R₅₀, when r is 1; and
Z'₁ has one of the meanings given for Z₁ above.
In formula V, R₅₀ when r is 3, as a trivalent linking group for example is an alkanetriyl, optionally substituted, e.g. with OH, such as for example 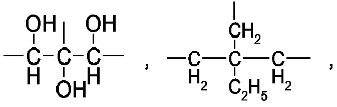 etc.; R₅₀ when r is 4, as a tetravalent linking group for example is an alkanetetrayl, such as for example 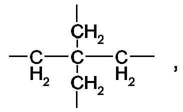 etc.
r preferably is 1 or 2. Preferred groups R₅₀ are substituted with A. R₅₀ in particular is C₂-C₅₀alkyl, for example C₂-C₂₄- or C₂-C₁₂alkyl, interrupted by Z₂, in particular by O. A is for example OR₅₈, NR₅₉R₆₀ or 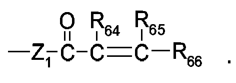 Preferably A is an acrylic group 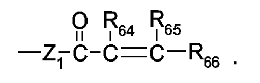 If one of R₅₁, R₅₂ and R₅₃ is other than hydrogen, the radical is for example in the 4- or 3- or 2-position of the phenyl ring, preferably in the 4- or 2-position, in particular in the 4-position, of the phenyl ring. If two of R₅₁, R₅₂ and R₅₃ are other than hydrogen, the radicals are for example in the 3,4-, 2,4-, 2,6-, preferably in the 3,4- or 2,4-, in particular in the 3,4-position of the phenyl ring. If R₅₁, R₅₂ and R₅₃ all are other than hydrogen the radicals are for example in the 3,4,5-, 2,4,6- or 2,3,4-position, in particular in the 2,4,6- or 3,4,5-position, of the phenyl ring.
R₅₁, R₅₂ and R₅₃ independently of one another are for example hydrogen, OR₅₈, SR₅₈, NR₅₉R₆₀ or 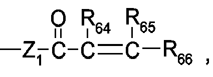 preferably OR₅₈. The same definitions as given for R₅₁, R₅₂ and R₅₃ apply for R₅₅, R₅₆ and R₅₇.
Z₁ is for example a direct bond, O or NR₆₁, preferably a direct bond or O. Z₂ is for example O, NR₆₁ or S, preferably O.
R₅₄ is for example hydrogen, C₁-C₅₀-, C₁-C₁₂- or C₁-C₄alkyl or together with R₅₀ and together with the N-atom forms a ring, besides the N-atom optionally comprising another group NR₅₄; preferably said ring comprises 6 atoms and is e.g. 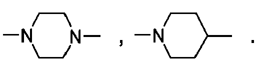 In particular R₅₄ is hydrogen or together with R₅₀ and with the N-atom forms a ring.
R₅₈ is for example hydrogen, C₁-C₂₄-, C₁-C₁₂- or C₁-C₄alkyl or C₂-C₁₂alkenyl or is a group 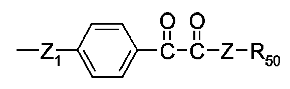 or R₅₈ is phenyl-C₁-C₄alkyl, in particular benzyl, substituted by 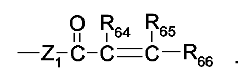 If R₅₈ is phenyl-C₁-C₄alkyl, in particular benzyl, substituted by 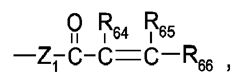 Z₁ preferably is a direct bond.
R₅₉ and R₆₀ independently of one another are for example hydrogen, C₁-C₁₂- or C₁-C₄alkyl, preferably hydrogen or methyl.
R₆₄, R₆₅ and R₆₆ are for example C₁-C₁₂alkyl or hydrogen, in particular C₁-C₄alkyl, for example methyl, or hydrogen.

Preferably in step (b) compounds of the formula II or V are employed.
In particular preferred photoinitiators in step (b) of the process according to the invention are benzophenones, α-hydroxyketones, α-aminoketones and phenylglyoxates.

In step (b) compositions not comprising, 4-chloro-2'-(11-acryloyl-2,5,8,11-tetraoxo-1-carboxyundecyl)-ben-zophenone as photoinitiator are preferred. In step (b) compositions not comprising, 4-chloro-2'(10hydroxy-2,5,8-trioxo-1-carboxy)benzophen-one as photoinitiator are preferred. In step (b) compositions not comprising, 1,12-bis(4-chloro-benzophen-2'-yl)-1,12-dicarboxy-2,5,8,11-tetraoxo-dodecane as photoinitiator are preferred. In step (b) compositions not comprising, 4-chloro-2'-(11-acryloyl-2,5,8,11-tetraoxo-1-carboxy-undecyl)-benzophenone, 4-chloro-2'(10hydroxy-2,5,8-trioxo-1-carboxy)benzophen-one and/or 1,12-bis(4-chloro-benzophen-2'-yl)-1,12-dicarboxy-2,5,8,11-tetraoxo-dodecane as photoinitiator are preferred.

The above-given examples for the definitions of the radicals are considered illustrative and non-limiting in view of the claimed scope.
The terms "and/or" or "or/and" in the present context are meant to express that not only one of the defined alternatives (substituents) may be present, but also several of the defined alternatives (substituents) together, namely mixtures of different alternatives (substituents).
The term "at least" is meant to define one or more than one, for example one or two or three, preferably one or two.

The term "optionally substituted" means, that the radical to which it refers is either unsubstituted or substituted.
Throughout this specification and the claims which follow, unless the context requires otherwise, the word "comprise", or variations such as "comprises" or "comprising", will be understood to imply the inclusion of a stated integer or step or group of integers or steps but not the exclusion of any other integer or step or group of integers or steps.

Many of the photoinitiators are commercially available and the preparation is published in the literature and known to the person skilled in the art. The preparation of compounds of formula II is for example described in US 4321118, US 5629356; of compounds of the formula III is for example known from US 4737593, US 4324744, WO 00/32612, WO 05/014605; of compounds of the formula IV is disclosed for example in GB 2339571, GB 2358017, WO 02/100903; and of compounds of the formula V is described in US 6048660 and European Patent Application No. 04106822.2, filed on December 22.
Many of the photoinitiators to be used in the claimed process are commercially available, e.g. under the trademark IRGACURE (Ciba Specialty Chemicals), ESACURE (Fratelli Lamberti), LUCIRIN (BASF), VICURE (Stauffer), GENOCURE, QUANTACURE (Rahn/Great Lakes), SPEEDCURE (Lambsons), KAYACURE (Nippon Kayaku), CYRACURE (Union Carbide Corp.), DoubleCure (Double Bond), EBECRYL P (UCB), FIRSTCURE (First Chemical), etc.. Commercially available unsaturated photoinitiators are, for example, 4-(13-acryloyl-1,4,7,10,13-pentaoxatridecyl)-benzophenone (Uvecryl P36 from UCB), 4-benzoyl-N,N-dimethyl-N-[2-(1-oxo-2-propenyl)oxy]ethylphenylmethanaminium chloride (Quantacure ABQ from Great Lakes), and some copolymerisable unsaturated tertiary amines (Uvecryl P101, Uvecryl P104, Uvecryl P105, Uvecryl P115, Uvecryl P38 from UCB Radcure Specialties) or copolymerisable aminoacrylates (Photomer 4116 and Photomer 4182 from Ackros; Laromer LR8812 from BASF; CN381 and CN386 from Cray Valley).

The photoinitiator, or where applicable the mixture of a plurality of photoinitiators and/or coinitiators, is applied to the corona-, plasma- or flame-pretreated substrate, for example, in pure form, that is to say without further additives, or in combination with a monomer or oligomer, or dissolved in a solvent. The initiator, or the initiator mixture, can also e.g. be in molten form. The initiator, or the initiator mixture, can also, for example, be dispersed, suspended or emulsified with water, a dispersant being added as necessary. Of course, it is also possible to use any mixture of the above-mentioned components, photoinitiator, monomer, oligomer, solvent, water.
Suitable dispersants, e.g. any surface-active compounds, preferably anionic, cationic and non-ionic surfactants, and also polymeric dispersants, are usually known to the person skilled in the art and are described, for example, in US 4 965 294 and US 5 168 087.
Suitable solvents are in principle any substances in which the photoinitiator, or the photoinitiators, can be converted into a state suitable for application, whether in the form of a solution or in the form of a suspension or emulsion. Suitable solvents are, for example, alcohols, such as ethanol, propanol, isopropanol, butanol, ethylene glycol *etc*., ketones, such as acetone, methyl ethyl ketone, acetonitrile, aromatic hydrocarbons, such as toluene and xylene, esters and aldehydes, such as ethyl acetate, ethyl formate, aliphatic hydrocarbons, e.g. petroleum ether, pentane, hexane, cyclohexane, halogenated hydrocarbons, such as dichloromethane, chloroform, or water, or alternatively oils, natural oils, castor oil, vegetable oil *etc*., and also synthetic oils. This description is on no account exhaustive and is given merely by way of example.
Alcohols, water and esters are preferred.

The monomers and/or oligomers containing at least one ethylenically unsaturated group, which optionally are used in step (b) of the process according to the invention may contain one or more ethylenically unsaturated double bonds. They may be lower molecular weight (monomeric) or higher molecular weight (oligomeric). Examples of monomers having a double bond are alkyl and hydroxyalkyl acrylates and methacrylates, e.g. methyl, ethyl, butyl, 2-ethylhexyl and 2-hydroxyethyl acrylate, isobornyl acrylate and methyl and ethyl methacrylate. Further examples are acrylonitrile, acrylamide, methacrylamide, N-substituted (meth)acrylamides, vinyl esters, such as vinyl acetate, vinyl ethers, such as isobutyl vinyl ether, styrene, alkyl- and halo-styrenes, N-vinylpyrrolidone, vinyl chloride and vinylidene chloride.

Examples of monomers having more than one double bond are ethylene glycol diacrylate, 1,6-hexanediol diacrylate, propylene glycol diacrylate, dipropylene glycol diacrylate, tripropylene glycol diacrylate, neopentyl glycol diacrylate, hexamethylene glycol diacrylate and bisphenol-A diacrylate, 4,4'-bis(2-acryloyloxyethoxy)diphenylpropane, trimethylolpropane triacrylate, pentaerythritol triacrylate, pentaerythritol tetraacrylate, vinyl acrylate, divinylbenzene, divinyl succinate, diallyl phthalate, triallyl phosphate, triallyl isocyanurate, tris-(hydroxyethyl) isocyanurate triacrylate (Sartomer 368; from Cray Valley) and tris(2-acryloylethyl) isocyanurate, ethyleneglycoldivinylether, diethyleneglycoldivinylether, triethyleneglycoldivinylether, polyethyleneglycol-mono-(meth)acrylate, polyethyleneglycol-di-(meth)-acrylate, glycidyl(meth)acrylate.

It is also possible to use acrylic esters of alkoxylated polyols, for example glycerol ethoxylate triacrylate, glycerol propoxylate triacrylate, trimethylolpropaneethoxylate triacrylate, trimethylolpropanepropoxylate triacrylate, pentaerythritol ethoxylate tetraacrylate, pentaerythritol propoxylate triacrylate, pentaerythritol propoxylate tetraacrylate, neopentyl glycol ethoxylate diacrylate or neopentyl glycol propoxylate diacrylate. The degree of alkoxylation of the polyols used may vary.

Examples of higher molecular weight (oligomeric) polyunsaturated compounds are acrylated epoxy resins, acrylated or vinyl-ether- or epoxy-group-containing polyesters, polyurethanes and polyethers. Further examples of unsaturated oligomers are unsaturated polyester resins, which are usually produced from maleic acid, phthalic acid and one or more diols and have molecular weights of about from 500 to 3000. In addition it is also possible to use vinyl ether monomers and oligomers, and also maleate-terminated oligomers having polyester, polyurethane, polyether, polyvinyl ether and epoxide main chains. In particular, combinations of vinyl-ether-group-carrying oligomers and polymers, as described in WO 90/01512, are very suitable, but copolymers of monomers functionalised with maleic acid and vinyl ether also come into consideration.

Also suitable are, for example, esters of ethylenically unsaturated carboxylic acids and polyols or polyepoxides, and oligomers having ethylenically unsaturated groups in the chain or in side groups, e.g. unsaturated polyesters, polyamides and polyurethanes and copolymers thereof, alkyd resins, polybutadiene and butadiene copolymers, polyisoprene and isoprene copolymers, polymers and copolymers having (meth)acrylic groups in side chains, and also mixtures of one or more such polymers.

Examples of unsaturated carboxylic acids are acrylic acid, methacrylic acid, crotonic acid, maleic acid, fumaric acid, itaconic acid, cinnamic acid and unsaturated fatty acids such as linolenic acid or oleic acid. Acrylic and methacrylic acid are preferred.
Suitable polyols are aromatic and especially aliphatic and cycloaliphatic polyols. Examples of aromatic polyols are hydroquinone, 4,4'-dihydroxydiphenyl, 2,2-di(4-hydroxyphenyl)propane, and novolaks and resols. Examples of polyepoxides are those based on the said polyols, especially the aromatic polyols and epichlorohydrin. Also suitable as polyols are polymers and copolymers that contain hydroxyl groups in the polymer chain or in side groups, e.g. polyvinyl alcohol and copolymers thereof or polymethacrylic acid hydroxyalkyl esters or copolymers thereof. Further suitable polyols are oligoesters having hydroxyl terminal groups.

Examples of aliphatic and cycloaliphatic polyols include alkylenediols having preferably from 2 to 12 carbon atoms, such as ethylene glycol, 1,2- or 1,3-propanediol, 1,2-, 1,3- or 1,4-butanediol, pentanediol, hexanediol, octanediol, dodecanediol, diethylene glycol, triethylene glycol, polyethylene glycols from 200-35000, preferably from 200 to 1500, polypropylene glycols having molecular weights from 200-35000, preferably from 200 to 1500, polytetrahydrofuranes having molecular weights from 200-50000, preferably from 200 to 2000, 1,3-cyclopentanediol, 1,2-, 1,3- or 1,4-cyclohexanediol, 1,4-dihydroxymethylcyclohexane, glycerol, tris(β-hydroxyethyl)amine, trimethylolethane, trimethylolpropane, pentaerythritol, dipentaerythritol and sorbitol.

The polyols may have been partially or fully esterified by one or by different unsaturated carboxylic acid(s), it being possible for the free hydroxyl groups in partial esters to have been modified, for example etherified, or esterified by other carboxylic acids.

Examples of esters are:
trimethylolpropane triacrylate, trimethylolethane triacrylate, trimethylolpropane trimethacrylate, trimethylolethane trimethacrylate, tetramethylene glycol dimethacrylate, triethylene glycol dimethacrylate, tetraethylene glycol diacrylate, pentaerythritol diacrylate, pentaerythritol triacrylate, pentaerythritol tetraacrylate, dipentaerythritol diacrylate, dipentaerythritol triacrylate, dipentaerythritol tetraacrylate, dipentaerythritol pentaacrylate, dipentaerythritol hexaacrylate, tripentaerythritol octaacrylate, pentaerythritol dimethacrylate, pentaerythritol trimethacrylate, dipentaerythritol dimethacrylate, dipentaerythritol tetramethacrylate, tripentaerythritol octamethacrylate, pentaerythritol diitaconate, dipentaerythritol trisitaconate, dipentaerythritol pentaitaconate, dipentaerythritol hexaitaconate, ethylene glycol diacrylate, 1,3-butanediol diacrylate, 1,3-butanediol dimethacrylate, 1,4-butanediol diitaconate, sorbitol triacrylate, sorbitol tetraacrylate, pentaerythritol-modified triacrylate, sorbitol tetramethacrylate, sorbitol pentaacrylate, sorbitol hexaacrylate, oligoester acrylates and methacrylates, glycerol di- and triacrylate, 1,4-cyclohexane diacrylate, bisacrylates and bismethacrylates of polyethylene glycol having a molecular weight of from 200 to 1500, and mixtures thereof.

Also suitable are the amides of identical or different unsaturated carboxylic acids and aromatic, cycloaliphatic and aliphatic polyamines having preferably from 2 to 6, especially from 2 to 4, amino groups. Examples of such polyamines are ethylenediamine, 1,2- or 1,3-propylenediamine, 1,2-, 1,3- or 1,4-butylenediamine, 1,5-pentylenediamine, 1,6-hexylenediamine, octylenediamine, dodecylenediamine, 1,4-diamino-cyclohexane, isophoronediamine, phenylenediamine, bisphenylenediamine, di-β-aminoethyl ether, diethylenetriamine, triethylenetetramine and di(β-aminoethoxy)- and di(β-aminopropoxy)-ethane. Further suitable polyamines are polymers and copolymers which may have additional amino groups in the side chain and oligoamides having amino terminal groups. Examples of such unsaturated amides are: methylene bisacrylamide, 1,6-hexamethylene bisacrylamide, diethylenetriamine trismethacrylamide, bis(methacrylamidopropoxy)ethane, β-methacrylamidoethyl methacrylate and N-[(β-hydroxyethoxy)ethyl]-acrylamide.
Specific examples are e.g. SARTOMER^{®} 259, 344, 610, 603, 252, CN435, SR415, SR9016 (provided by Cray Valley)

Suitable unsaturated polyesters and polyamides are derived, for example, from maleic acid and diols or diamines. The maleic acid may have been partially replaced by other dicarboxylic acids. They may be used together with ethylenically unsaturated comonomers, e.g. styrene. The polyesters and polyamides may also be derived from dicarboxylic acids and ethylenically unsaturated diols or diamines, especially from those having longer chains of e.g. from 6 to 20 carbon atoms. Examples of polyurethanes are those composed of saturated diisocyanates and unsaturated diols or unsaturated diisocyanates and saturated diols.

Polybutadiene and polyisoprene and copolymers thereof are known. Suitable comonomers include, for example, olefins, such as ethylene, propene, butene, hexene, (meth)acrylates, acrylonitrile, styrene and vinyl chloride. Polymers having (meth)acrylate groups in the side chain are likewise known. Examples are reaction products of novolak-based epoxy resins with (meth)acrylic acid; homo- or co-polymers of vinyl alcohol or hydroxyalkyl derivatives thereof that have been esterified with (meth)acrylic acid; and homo- and co-polymers of (meth)acrylates that have been esterified with hydroxyalkyl (meth)acrylates.

In the context of the present application the term (meth)acrylate includes both the acrylate and the methacrylate. An acrylate or methacrylate compound is especially used as the mono- or poly-ethylenically unsaturated compound. Very special preference is given to polyunsaturated acrylate compounds, such as have already been mentioned above.

In process step (b) any photoinitiator is suitable, advantageously for example a photoinitiator, comprising an unsaturated group is used as such. Or, for example, a photoinitiator, comprising an unsaturated group is used together with another photoinitiator, without an unsaturated group. For example the use of a photoinitiator, not comprising an unsaturated group alone or together with a monomer or oligomer is also suitable. Or, all combinations as mentioned above together with a monomer or oligomer may be employed. It's evident, that all combinations may further be incorporated in a solvent, e.g. water.
The invention relates also to a process wherein the photoinitiators or mixtures thereof with monomers or oligomers are used in combination with one or more liquids (such as solvents, e.g. water) in the form of solutions, suspensions and emulsions.
After the plasma-, corona-, flame- or ozonization-pretreatment, it is therefore possible in process step (b) to apply to the pretreated substrate an adhesion promoting composition comprising, for example, 0.0001-100 %, e.g. 0.001-50 %, 0.01-20 %, 0.01-10%, 0.01-5 %, 0.1-5 %, 0.1-2%, especially 0.1-1 % of a photoinitiator having an unsaturated group or, for example, 0.0001-99.9999 %, e.g. 0.001-50 %, 0.01-20 %, 0.01-10%, 0.01-5 %, 0.1-5 %, 0.1-2%,especially 0.1-1 % of a photoinitiator, e.g. one without an unsaturated group, and e.g. 0.0001-99.9999 %, e.g. 0.001-50 %, 0.01-20 %, 0.01-10%, 0.01-5 %, 0.1-5 %, 0.1-2%, especially 0.1-1 % of a monomer, such as an acrylate, methacrylate, vinyl ether *etc*. based on the total formulation which preferably contains solvent(s) and optionally other compounds such as defoamers, emulsifiers, surfactants, anti-fouling agents, wetting agents and other additives customarily used in the industry, especially the coating and paint industries.
The application of the photoinitiators, or mixtures thereof with one another or with monomers or oligomers, diluted or undiluted, in the form of melts, solutions, dispersions, suspensions or emulsions, can be carried out in various ways. Application can for example be effected by vapor deposition, immersion, spraying, coating, brush application, knife application, roller application, offset printing, gravure printing, flexo printing, ink jet printing, screen printing, dipping, spin-coating and pouring. In the case of mixtures of photoinitiators with one another and with coinitiators and sensitizers, all possible mixing ratios can be used.

The photoinitiator(formulation/solution) in step (b) can be applied on the whole surface of the substrate, or can be applied only on selected areas.

Also of interest is a process wherein the adhesion promoting composition (process step (b)) the photoinitiator or the mixture of photoinitiators is used in molten form.
The photoinitiator (formulation/solution) layer deposited in step (b) has a thickness up to 100 microns, up to 50 microns, 10 microns, preferably from e.g. a monomolecular layer to 5 microns, 5 nm to 4 microns, especially from 5 nm to 1 micron.
Preferably the adhesion promoting layer deposited in step (b) has a thickness up to 10 microns, in particular from a monomolecular layer to 5 microns.

After carrying out step (c) the photoinitiator(formulation), i.e. the adhesion promoting layer, has preferably a thickness ranging up to 1 micron, from e.g. a monomolecular layer to 500 nm, especially from a monomolecular layer to 200 nm, a monomolecular layer to 100 nm, especially from 5 nm to 100 nm and especially from 5 nm to 50 nm.

In the process of the invention the steps (a), (b), (c) and (d) have to follow each other, where (a), (b) and (c) advantageously are done within 1 hour, for example within 10 minutes, preferably within one minute. In particular all steps (a) to (d) are performed within 1 hour, for example within 10 minutes, especially within 1 minute, and preferably in less than 10 seconds. Most preferred is to perform all steps (a)-(d) in line in less than 5 seconds.
After the application of the photoinitiator in step (b) and optionally in step (c), the workpiece can be stored or immediately processed further. In principle, it is advantageous to apply the photoinitiator as quickly as possible after the plasma-, corona- or flame-pretreatment, but for many purposes it may also be acceptable to carry out reaction step (b) after a time delay. As mentioned above, it is preferable, however, to carry out process step (b) immediately after process step (a).

As additional additives cationic, anionic and non-ionic surfactants, defoamers etc. optionally are present in the formulation that is applied in step (b) of the process according to the invention.
Examples for such compounds are known to the person skilled in the art and many compounds of this type are commercially available (e.g. provided by Byk-Chemie).
Specific examples are:
1. Anionic surfactants
   1.1 Condensates of aromatic sulfonic acids with formaldehyde, such as condensation products of formaldehyde and naphthalenesulfonic acid or of formaldehyde, naphthalenesulfonic acid and benzenesulfonic acid, or condensation products of crude cresol, formaldehyde and naphthalenesulfonic acid.
   1.2 Lignosulfonates, for example those obtained by the sulfite or kraft process. Preferably these are products some of which are hydrolysed, oxidised or desulfonated and fractionated by known processes, for example according to molecular weight or the degree of sulfonation. Mixtures of sulfite- and kraft-lignosulfonates are very effective.
   1.3 Dialkyl sulfosuccinates in which the alkyl moieties are branched or unbranched, for example dipropyl sulfosuccinate, diisobutyl sulfosuccinate, diamyl sulfosuccinate, bis(2-ethyl hexyl)sulfosuccinate or dioctyl sulfosuccinate.
   1.4 Sulfated or sulfonated fatty acids or fatty acid esters of fatty acids, for example sulfated oleic acid, elaidic acid or ricinolic acid and the lower alkyl esters thereof, for example the ethyl, propyl or butyl esters. Also very suitable are the corresponding sulfated oils, such as olive oil, rapeseed oil and, especially, castor oil.
   1.5 Reaction products of ethylene oxide and/or propylene oxide with saturated or unsaturated fatty acids, fatty alcohols, fatty amines, alicyclic alcohols or aliphatic-aromatic hydrocarbons that are terminally esterified with an inorganic oxygen-containing acid or a polybasic carboxylic acid. Such compounds are preferably compounds of formula R-Q₂-(CH₂C₂HO)ₛ-Q₁
      wherein R is an aliphatic hydrocarbon radical having from 8 to 22 carbon atoms or a cycloaliphatic or aliphatic-aromatic hydrocarbon radical having from 10 to 22 carbon atoms; Q₂ is -O-, -NH- or -CO-O-; Q₁ is the acid radical of an inorganic, polybasic acid or the radical of a polybasic carboxylic acid and s is a number from 1 to 20, preferably from 1 to 5. The radical R-Q₂- is derived, for example, from a higher alcohol, such as decyl alcohol, lauryl alcohol, tridecyl alcohol, myristyl alcohol, cetyl alcohol, stearyl alcohol, oleyl alcohol, arachidyl alcohol, hydroabietyl alcohol or behenyl alcohol; from a fatty amine, such as stearylamine, palmitylamine or oleylamine; from a fatty acid, such as caprylic acid, capric acid, lauric acid, myristic acid, palmitic acid, stearic acid, arachidic acid, behenic acid, coconut fatty (C₈-C₁₈)acid, decenoic acid, dodecenoic acid, tetradecenoic acid, hexadecenoic acid, oleic acid, linoleic acid, linolenic acid, eicosenoic acid, docosenoic acid or clupanodonic acid; or from an alkylphenol, such as butylphenol, hexylphenol, n-octylphenol, n-nonylphenol, p-tert-octylphenol, p-tert-nonylphenol, decylphenol, dodecylphenol, tetradecylphenol or hexadecylphenol. The acid radical Q₁ is normally derived from a low-molecular-weight dicarboxylic acid, such as maleic acid, malonic acid, succinic acid or sulfosuccinic acid, and is linked by way of an ester bridge to the radical R-Q₂-(CH₂CH₂O)ₛ-. Preferably, however, Q₁ is derived from an inorganic polybasic acid, such as orthophosphoric acid or sulfuric acid. The acid radical Q₁ is preferably in salt form, for example in the form of an alkali metal salt, ammonium salt or amine salt. Examples of such salts are sodium, potassium, ammonium, trimethylamine, ethanolamine, diethanolamine and triethanolamine salts.
      The anionic dispersants are normally in the form of their alkali metal salts, their ammonium salts or their water-soluble amine salts. Dispersants with a low electrolyte content will preferably be used.
2. Non-ionic surfactants
   ethylene oxide adducts from the class of the addition products of ethylene oxide with higher fatty acids, saturated or unsaturated fatty alcohols, fatty amines, mercaptans, fatty acid amides, fatty acid alkylolamides or fatty amines, or with alkylphenols or alkylthiophenols, which adducts preferably contain from 5 to 100 mol of ethylene oxide per mol of the mentioned compounds, as well as ethylene oxide-propylene oxide block polymers and ethylenediamineethylene oxide-propylene oxide adducts. Such non-ionic surfactants include:
   2.1 reaction products of saturated and/or unsaturated fatty alcohols having from 8 to 20 carbon atoms containing from 20 to 100 mol of ethylene oxide per mol of alcohol, preferably saturated linear C₁₆-C₁₈alcohols containing from 25 to 80 mol, preferably 25 mol, of ethylene oxide per mol of alcohol;
   2.2 reaction products of saturated and/or unsaturated fatty acids having from 8 to 20 carbon atoms containing from 5 to 20 mol of ethylene oxide per mol of acid;
   2.3 reaction products of alkylphenols having from 7 to 12 carbon atoms containing from 5 to 25 mol of ethylene oxide per mol of phenolic hydroxy group, preferably reaction products of mono- or di-alkylphenols containing from 10 to 20 mol of ethylene oxide per mol of phenolic hydroxy group;
   2.4 reaction products of saturated and/or unsaturated fatty acid amides having up to 20 carbon atoms containing from 5 to 20 mol of ethylene oxide per mol of acid amide, preferably oleyl amides containing from 8 to 15 mol of ethylene oxide per mol of acid amide;
   2.5 reaction products of saturated and/or unsaturated fatty acid amines having from 8 to 20 carbon atoms containing from 5 to 20 mol of ethylene oxide per mol of amine, preferably oleylamines containing from 8 to 15 mol of ethylene oxide per mol of amine;
   2.6 ethylene oxide-propylene oxide block polymers containing from 10 to 80% ethylene oxide and having molecular weights of from 1000 to 80 000;
   2.7 adducts of ethylene oxide-propylene oxide with ethylenediamine.
3. Polymeric dispersants and protective colloids
   Suitable polymeric dispersants include, for example, amphiphilic copolymers, block copolymers and graft or comb polymers, especially those based on acrylic acid, methacrylic acid or salts thereof, hydroxyalkyl(meth)acrylic acid, aminoalkyl(meth)acrylic acid or salts thereof, 2-acrylamido-2-methylpropanesulfonic acid (AMPS) or salts thereof, maleic acid anhydride or salts thereof, (meth)acrylamide or substituted (meth)acrylamides, vinyl heterocycles, such as, for example, vinylpyrrolidone, vinylimidazole, and also amphiphilic polymers comprising segments of PEO or EO/PO copolymers.
   Suitable protective colloids are, for example, polyvinyl alcohol, polyvinylpyrrolidone and copolymers thereof.
   Also suitable are copolymers of synthetic monomers, especially of monomers containing carboxy groups, for example copolymers of 2-vinylpyrrolidone with 3-vinylpropionic acid or maleic acid copolymers and salts thereof.
   Preferred dispersants are polymers based on maleic acid anhydride, polyvinyl alcohol or modified polyacrylates, for example the alkali salts, especially the sodium salts, of carboxylic acid copolymers or polyvinyl alcohol.
   Examples of such additives include thickeners, which stabilise the dispersions. Examples of suitable thickeners are, especially, modified polysaccharides of the xanthan, alginate, guar or cellulose type, and polyacrylate thickeners. These thickeners include, for example, cellulose ethers, for example methyl cellulose or carboxymethyl cellulose, and heteropolysaccharides, which contain mannose or glucuronic acid groups in the side-chains. Such thickeners are available commercially.
   As already mentioned, the person skilled in the art is familiar with suitable additives. Further descriptions of such compounds are for example published in Bieleman, J. (editor); Lackadditive, Wiley-VCH Verlag GmbH, Weinheim, 1998; Calbo, L.J. (editor), Handbook of Coatings Additives, Marcel Dekker, Inc., New York, 1987; Patton, T.C., Paint Flow and Pigment Dispersion, John Wiley & Sons, Inc., 1964; Kittel, H. (editor), Lehrbuch der Lacke und Beschichtungen ("textbook of lacquers and coatings");, Bd. III, Verlag W.A. Colomb, 1976 Karsten, E., Lackrohstofftabellen ("tables of lacquer raw materials"), Vincentz Verlag, Hannover, 2000; in particular interesting for paint formulations, pigments, resins etc. are Stache, H. (editor), Tensid-Taschenbuch, ("pocket book of tensides") Carl Hanser Verlag, München Wien, 1990; Zorll, U. (editor), Lackformulierung und Lackrezeptur ("lacquer formulation and lacquer composition"), Vincentz Verlag, Hannover, 2003; Paul, S. (editor), Surface Coatings, J. Wiley & Sons, Chichester, 1985; and Zorll, U. (editor), European Coatings Handbook, Vincentz Verlag Hannover, 2000.

Many possible methods of drying coatings are known and they can all be used in the claimed process, in step (c) as well as in step (d). For example, it is possible to use hot gases, IR radiators, microwaves and radio frequency radiators, ovens and heated rollers. Drying can also be effected, for example, by absorption, e.g. penetration into the substrate. This relates especially to the drying in process step (c). Drying can take place, for example, at temperatures from 0°C to 500°C (e.g. for steel plates or steel sheets), 0°C to 300°C, for example from 20°C to 200°C or from 0-100°C.

The irradiation of the coating in order to fix the photoinitiator in process step (c) (and also optional to cure a formulation in process step (d) can be carried out, using any sources that emit electromagnetic waves of wavelengths that can be absorbed by the photoinitiators used. Such sources are generally light sources that emit light in the range from 150 nm to 700 nm. Irradiation can also be carried out using electron beams. In addition to customary radiators and lamps also lasers and LEDs (Light Emitting Diodes) are suitable. The whole area of the coating or parts thereof may be irradiated. Partial irradiation is of advantage when only certain regions are to be rendered adherent.
Preferably the radiation is UV/VIS radiation, which is to be understood as being electromagnetic radiation in a wavelength range from 150 nm to 700 nm, for example from 200 nm to 600 nm. Preference is given to the range from 250 nm to 500 nm. Suitable lamps are known to the person skilled in the art and are commercially available. A large number of the most varied kinds of light source may be used. Both, point sources and planiform radiators (lamp arrays) are suitable. Examples are: carbon arc lamps, xenon arc lamps, medium-pressure, super-high-pressure, high-pressure and low-pressure mercury radiators, doped, where appropriate, with metal halides (metal halide lamps), microwave-excited metal vapor lamps, excimer lamps, superactinic fluorescent tubes, fluorescent lamps, argon incandescent lamps, flash lamps, photographic floodlight lamps, light-emitting diodes (LED), electron beams and X-rays. The distance between the lamp and the substrate to be irradiated may vary according to the intended use and the type and strength of the lamp and may be, for example, from 2 cm to 150 cm. Also suitable are laser light sources, for example excimer lasers, such as Krypton-F lasers for irradiation at 248 nm. Lasers in the visible range may also be used.

Advantageously the dose of radiation used in process step (c) is e.g. from 1 to 1000 mJ/cm², such as 1-800 mJ/cm², or, for example, 1-500 mJ/cm², e.g. from 5 to 300 mJ/cm², preferably from 10 to 200 mJ/cm².
The drying and/or irradiation (in steps (c) and/or (d)) can be carried out under air or under inert gas. Nitrogen gas comes into consideration as inert gas, but other inert gases, such as CO₂ or argon, helium etc. or mixtures thereof, can also be used. Suitable systems and apparatus are known to the person skilled in the art and are commercially available.
The UV-light for the curing is emitted for example by UV-lamps, corona discharges or from a plasma. Thus, the curing in step (c) and/or (d) of the process according to the invention optionally is performed with a corona discharge or a plasma. The corona and plasma are as described above for step (a). In step (d) of the process according to the invention, the curing additionally is for example effected by an electron beam (EB).

In step (d) according to the process of the invention a silicon and/or fluorine containing composition, optionally diluted in a solvent, is applied on top of the adhesion layer to form a release layer. The release layer contains at least one component containing Si and/or F and additionally for example comprises further monomers and/or oligomers (see description of the monomers above) and optionally surfactants, emulsifiers, defoamers etc. as described above for step (b).

The silicon and/or fluorine containing composition comprises organopolyiloxanes, i.e. compounds which contain the unit(s)

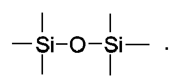

Such Si and/or F containing compositions and their preparation are known in the art and for example described in US 5888649, US 3726710, US 5496635, WO 02/06404, EP 1411095, EP 1382651, US 6156437, WO 00/031203, WO 88/07931, JP 63 095285, JP 50107078, JP 2000 281965, US 6156437, US 4547431, US 4320172, US 4261876, US 4608270, US 4774111, US 4447499, US 2003232900, EP 1215254, US 6673457, JP 2002 240203, EP 842996, US 6376569, JP 62 292867, EP 810253, US 5721291, US 5616629, US 5543231, US 5510190, US 6548568, JP 2001 225416, JP 2001 225417, US 6040353, EP 1097180, DE 19821716, US 5696180, US 5552506, JP 07 292320, US 5494945, US 5391405, US 5118723, JP 1145139, US 4831064, JP 61 143482, JP 60 155452, US 6613859, US 6632537, US 6641922. The disclosure thereof is incorporated by reference.

It is to be understood that the organopolysiloxane to be cured for example is a monomer, an oligomer or polymer, e.g. a homopolymer, a copolymer or terpolymer and is either a single compound or a mixture of two or more different siloxanes.
The siloxanes are linear or branched, linear siloxanes are preferred. Further, compositions not comprising fluorine are preferred.
General examples of suitable silicon release formulations for step (d) are:
(d1) The release layer containing Si and/or F comprises components with olefinic groups, either in the same molecule with the Si or F, or in a separate compound. The release layer optionally contains a photoinitiator.
   For example the layer comprises an organopoysiloxane that contains one or more groups (e.g. vinyl, acryl, methacryl etc.) which are reactive towards radical polymerization. E.g. TEGO RC 711, TEGO RC 902 etc.
(d2) The release layer containing Si and/or F comprises components with epoxy groups either in the same molecule with the Si or F, or in a separate compound. The release layer optionally contains a photoinitiator.
   For example the layer comprises an organopolysiloxane that contains one or more groups (e.g. vinyl, epoxy, glycidyl etc.) which are reactive towards cationic polymerization.
(d3) The release layer containing Si comprises Si-H groups and olefinic groups and optionally other functional groups. The release layer optionally contains a catalyst suitable for hydrosilylation reactions, e.g. a platinum complex.
(d4) The release layer containing Si comprises Si-OH, Si-halogen or Si-Oalkyl groups and optionally other functional groups. The release layer optionally contains a catalyst suitable for condensation reactions, e.g. a tin complex.
(d5) The release layer comprises mixtures of (d1), (d2), (d3) and/or (d4), in particular mixtures of (d1) and (d2).

The release layer (after optionally drying) for example has an average thickness of less than 10 microns, or e.g. less than 5 microns, for example less than 2 microns, e.g. less than 1 micron, preferably less than 500 nm, in particular less than 250 nm, especially less than 100 nm.
Subject of the invention accordingly is a process, wherein the silicon and/or fluorine containing layer (d) after optional drying and curing, has a thickness ranging up to 10 microns, preferably from a monomolecular layer to 5 microns, and more preferably from a monomolecular layer up to 1 micron.

In particular interesting is a process, wherein the silicon and/or fluorine containing layer (d) comprises a compound of the formula I, 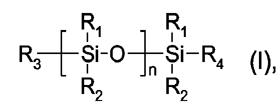 wherein
n is 1 to 1000;
R₁, R₂, R₃ and R₄ independently of one another are C₁-C₂₀alkyl; C₁-C₂₀alkyl substituted by one or more group(s) selected from X, OH, CₚF₂ₚ₊₁, phenyl and Y;
C₂-C₅₀alkyl interrupted by one or more O; C₂-C₅₀alkyl interrupted by one or more O and substituted by one or more group(s) selected from X, CₚF₂ₚ₊₁, OH, phenyl and Y;
C₂-C₂₀alkenyl; C₂-C₂₀alkenyl substituted by one or more group(s) selected from X, CₚF₂ₚ₊₁, OH, C₁-C₁₀alkoxy, phenyl and Y;
C₃-C₂₀alkenyl interrupted by one or more O; C₃-C₂₀alkenyl interrupted by one or more O and substituted by one or more group(s) selected from X, CₚF₂ₚ₊₁, OH, C₁-C₁₀alkoxy, phenyl and Y;
phenyl; phenyl substituted by one or more group(s) selected from X, CₚF₂ₚ₊₁, C₁-C₁₀alkyl, C₂-C₁₀alkenyl, OH, C₁-C₁₀alkoxy and Y;
naphthyl; naphthyl substituted by one or more group(s) selected from X, CₚF₂ₚ₊₁, C₁-C₁₀alkyl, C₂-C₁₀alkenyl, OH, C₁-C₁₀alkoxy, phenyl and Y;
biphenylyl; biphenylyl substituted by one or more group(s) selected from X, CₚF₂ₚ₊₁, C₁-C₁₀alkyl, C₂-C₁₀alkenyl, OH, C₁-C₁₀alkoxy and Y;
C₁-C₂₀alkoxy; C₁-C₂₀alkoxy substituted by one or more group(s) selected from X, CₚF₂ₚ₊₁, C₂-C₁₀alkenyl, OH, phenyl and Y;
C₂-C₅₀alkoxy interrupted by one or more O; C₂-C₅₀alkoxy interrupted by one or more O and substituted by one or more group(s) selected from X, CₚF₂ₚ₊₁, C₂-C₁₀alkenyl, OH, phenyl and Y;
phenoxy; phenyloxy substituted by one or more group(s) selected from X, CₚF₂ₚ₊₁, C₁-C₁₀alkyl, C₂-C₁₀alkenyl, OH, C₁-C₁₀alkoxy and Y;
naphthyloxy; naphthyloxy substituted by one or more group(s) selected from X, CₚF₂ₚ₊₁, C₁-C₁₀alkyl, C₂-C₁₀alkenyl, OH, C₁-C₁₀alkoxy and Y;
biphenyloxy; biphenyloxy substituted by one or more group(s) selected from X, CₚF₂ₚ₊₁, C₁-C₁₀alkyl, C₂-C₁₀alkenyl, OH, C₁-C₁₀alkoxy and Y;
or R₁, R₂, R₃ and R₄ independently of one another are Y;
or the radicals R₃ and R₄ of different compounds of the formula (I) together form a C₃-C₅₀alkylene chain, which optionally is interrupted by one or more O and/or 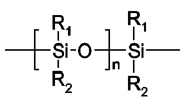 and which optionally is substituted by one or more R₁₀;
Y is 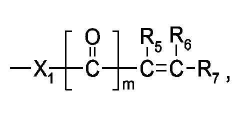 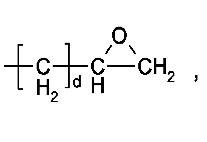 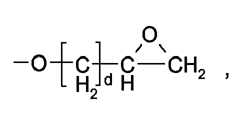 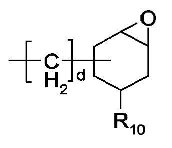 or 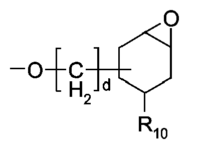 p is 1 to 24;
m is 0 or 1;
d is an integer from 0-10;
X is hydrogen, halogen, OR₈, NR₈R₉, SR₈, CN, NCO, COOR₈, OCOR₈, CONR₈R₉, NR₈COR₉, OCOOR₈, OCONR₈R₉, NR₈COOR₉ or Y;
X₁ is O, NR₈ or C₁-C₁₂alkylene;
R₅, R₆ and R₇ independently of one another are hydrogen or C₁-C₆alkyl;
R₈ and R₉ independently of one another are hydrogen or R₁₁;
R₁₀ is hydrogen or C₁-C₁₀alkyl;
R₁₁ is C₁-C₂₀alkyl, phenyl-C₁-C₄alkyl, phenyl, naphthyl or biphenylyl; all of which optionally are substituted by one or more R₁₂;
R₁₂ is hydrogen, halogen, OR₁₃, NR₁₃R₁₄, SR₁₃, CN, NCO, COOR₁₃, OCOR₁₄, CONR₁₃R₁₄, NR₁₃COR₁₄, OCOOR₁₃, OCONR₁₃R₁₄, NR₁₃COOR₁₄ or Y;
R₁₃ and R₁₄ independently of one another are hydrogen, C₁-C₂₀alkyl, phenyl-C₁-C₄alkyl, phenyl, naphthyl or biphenylyl;
provided that
(d1) at least one of R₁, R₂, R₃ or R₄ comprises a group 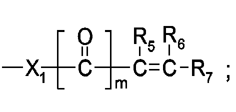 or
(d2) at least one of R₁, R₂, R₃ or R₄ comprises a group 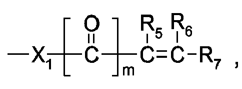 wherein m is 0 and X₁ is O, or comprises a group 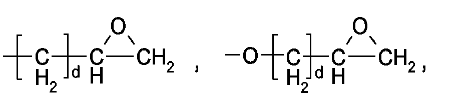 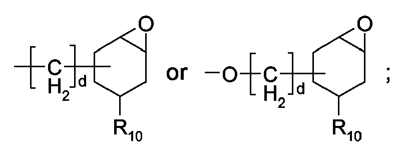 or
(d3) at least one of R₁, R₂, R₃ or R₄ comprises an olefinic group and at least one of R₁, R₂, R₃ or R₄ is hydrogen, wherein the Si-H group and the olefinic group are located in one or different organopolysiloxane chains of the molecule or in different molecules; or
(d4) at least two of R₁, R₂, R₃ or R₄ are selected from C₁-C₁₀alkoxy, OH, CₚF₂ₚ₊₁ and halogen, or
   at least one of R₁, R₂, R₃ or R₄ is selected from C₁-C₁₀alkoxy and OH and at least one of R₁, R₂, R₃ or R₄ is CₚF₂ₚ₊₁ or halogen; or
(d5)the silicon and/or fluorine containing layer comprises any mixtures of compounds according to (d1), (d2), (d3) or (d4).

In the compounds of the formula I, all R₁ in one molecule are not imperatively identical, but optionally have different meanings in the frame of the given definitions. That means not all R₁ in the polymeric chain have to be identical, but optionally have different meanings. The same applies for R₂.
The polyorganosilicon backbone in the compounds of the formula I is linear or branched.

C₁-C₁₀alkyl is linear or branched or cyclic and is, for example C₁-C₈-, C₁-C₆- or C₁-C₄alkyl or C₃-C₁₀- or C₅-C₁₀cycloalkyl. Examples are methyl, ethyl, propyl, isopropyl, n-butyl, sec-butyl, isobutyl, tert-butyl, pentyl, hexyl, heptyl, 2,4,4-trimethylpentyl, 2-ethylhexyl, octyl, nonyl or decyl and cyclopropyl, cyclopentyl, cyclohexyl, cyclooctyl, cyclo-dodecyl, especially cyclopentyl and cyclohexyl, preferably cyclohexyl. The alkyl, and C₃-C₁₀cycloalkyl respectively, in the context of the present application is to be also understood as alkyl which at least comprises one ring. For example methyl-cyclopentyl, methyl- or dimethylcyclohexyl, 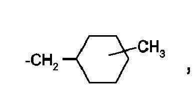 as well as bridged or fused ring systems, e.g. 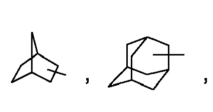 etc. are also meant to be covered by the term.

The meanings for C₂-C₁₀alkenyl and C₁-C₁₀alkoxy of the substituents defined in formula I correspond to the ones as explained above for the compounds of the formula II, III, IV and V.

C₂-C₁₀alkyl interrupted by one or more O is for example interrupted 1-9, 1-7, 1-4 or once or twice by O. In case the groups are interrupted by more than one O, said O-atoms are separated from one another by at least one methylene group, i.e. the O-atoms are nonconsecutive. Examples are the following structural units -CH₂-O-CH₃, -CH₂CH₂-O-CH₂CH₃, -[CH₂CH₂O]ᵥCH₃, with v = 1-4, -(CH₂CH₂O)₄CH₂CH₃, -CH₂-CH(CH₃)-O-CH₂-CH₂CH₃, or -CH₂-CH(CH₃)-O-CH₂CH₃.
C₃-C₁₀alkenyl interrupted by one or more O is for example interrupted 1-9, 1-7, 1-4 or once or twice by O. In case the groups are interrupted by more than one O, said O-atoms are separated from one another by at least one methylene group, i.e. the O-atoms are nonconsecutive.
C₂-C₁₀alkoxy interrupted by one or more O is for example interrupted 1-9, 1-7, 1-4 or once or twice by O. In case the groups are interrupted by more than one O, said O-atoms are separated from one another by at least one methylene group, i.e. the O-atoms are nonconsecutive. Examples are the following structural units -O-CH₂-O-CH₃, -O--CH₂CH₂-O-CH₂CH₃, -O-[CH₂CH₂O]ᵥCH₃, with v = 1-4, -O-(CH₂CH₂O)₄CH₂CH₃, -O-CH₂-CH(CH₃)-O-CH₂-CH₂CH₃, or -O-CH₂-CH(CH₃)-O-CH₂CH₃.

If the radicals R₃ and R₄ of different compounds of the formula (I) together form a C₃-C₅₀alkylene chain, which optionally is interrupted by one or more O and/or 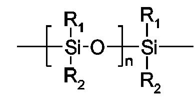 and which optionally is substituted by one or more R₁₀; for example structures according to the following formula (Ia) are obtained: 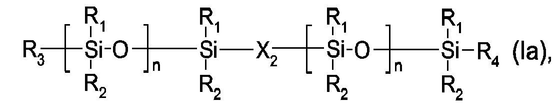 wherein R₁, R₂, R₃, R₄ and n are as defined above and wherein n optionally denotes different integers for each polysiloxane chain of formula (Ia);
X₂ is C₃-C₅₀alkylene, optionally interrupted by one or more O and/or 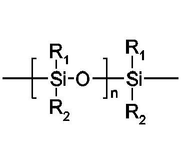 and optionally substituted by one or more R₁₀; and
R₁₀ is as defined above.
n is 1 to 1000; for example n is 5 to 1000, preferably n is 10 to 500. m is 0 or 1, preferably 1.
d is an integer from 0 to 10, preferably is 0,1 or 2.

In the compounds of the formula I, wherein (d1) at least one of R₁, R₂, R₃ or R₄ comprises a group 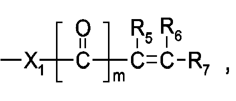 curing of the silicon component is performed via the olefinic groups.
That is, in one embodiment of the invention in the process as described above, a silicon and/or fluorine containing composition, comprising
(d1) a siloxane having terminal alkenyl groups, optionally in the presence of a radical photoinitiator and/or thermal radical initiator, optionally diluted in a solvent, is applied on top of the adhesion layer to form a release layer, and the release layer is optionally dried and/or treated thermally and/or with electromagnetic waves.

Advantageously, the silicon and/or fluorine containing composition comprising said compounds of the formula I, additionally comprises at least one catalyst for the cross-linking, e.g. in case of a radiation-curing reaction a photoinitiator. Suitable in this context are photoinitiators as already described above. Other catalysts are for example the radical polymerization starters known in the art, e.g. organic peroxides, such as di-t-butyl peroxide, dicumylperoxide, benzoyl peroxide, azobisisobutyronitrile and the like.

The siloxane comprises an olefinic functional group, for example an acrylate, a methacrylate or a vinylether functional group, preferably an acrylate or methacrylate The siloxane, is for example further substituted and the olefinic functional group is part of substituent R₁ to R₄. That is, the olefinic functional group also may be attached directly to a Si-atom.
Examples of such radiation curable release coating compositions are e.g. given in US 5888649 and all patents disclosed therein.

The release coating composition comprises an organopoylsiloxane component containing one or more groups which are reactive toward free radical polymerization, e.g. initiated by radiation. Examples of such groups include vinyl groups including vinyl acrylate groups, vinyl ether groups, vinyl ester groups, and epoxy acrylate groups. The organopolysiloxane containing the radiation reactive groups are usually present in the release coating compositions in amounts of from about 0.01% to 100%, 0.01% to 50%, 0.01% to 20%, 0.01% to about 10% by weight, for example from about 1% to about 5% by weight.
The acrylic functional organopolysiloxanes for example contain about 0.1 % to 75%, 0.1 % to 50%, 0.1% to 20%, by weight of acryloxy or methacryloxy groups, more often, from about 1 % to 15%, 3% to about 15% by weight of the acryloxy or methacryloxy groups. Interesting are further such polysiloxanes which have an average molecular weight of from about 1000 to about 20000. Siloxanes of higher molecular weight are also suitable. The organopolysiloxanes are linear or branched. Preferred are linear compounds.

It is clear that the silicon component in the release layer may be in admixture with further components, in particular acrylate monomers, oligomers and polymers. The terms "acrylic" and "acrylate" are used generally to include derivatives of acrylic acids as well as substituted acrylic acids such as methacrylic acid, ethacrylic acid, etc., unless clearly indicated otherwise.
Examples are as described above in connection with the monomers/oligomers suitable in step (b) of the process according to the invention, e.g. obtained by polyhydroxy compounds such as ethylene glycol, propylene glycol, etc., to form derivatives such as diethylene glycol, triethylene glycol, tetraethylene glycol, polyethylene glycol, propylene glycol, dipropylene glycol, tripropylene glycol, tetrapropylene glycol, polypropylene, glycol, etc., and thereafter reacting the ether containing polyhydroxy compound with an acrylic acid or acrylic ester.
Specific examples of suitable polyfunctional acrylate monomers are diethylene glycol diacrylate, triethylene glycol diacrylate, tetraethylene glycol diacrylate, polyethylene glycol diacrylate, dipropylene glycol diacrylate, tripropylene glycol diacrylate, tetrapropylene glycol diacrylate, polypropylene glycol diacrylate, glyceryl ethoxylate diacrylate, glyceryl propoxylate diacrylate, glyceryl ethoxylate triacrylate, glyceryl propoxylate triacrylate, trimethylolpropane ethoxylate triacrylate, trimethylolpropane propoxylate triacrylate, neopentylglycol ethoxylate diacrylate, neopentylglycol propoxylate diacrylate, monomethoxy trimethylolpropane ethoxylate diacrylate, pentaerythritol ethoxylate tetraacrylate, pentaerythritol propoxylate tetraacrylate, dipentaerythritol ethoxylate pentaacrylate, dipentaerythritol propoxylate pentaacrylate, di-trimethylolpropane ethoxylate tetraacrylate, Bisphenol A ethoxylate diacrylate, Bisphenol A propoxylate diacrylate, etc. Examples of polyfunctional acrylate monomers include 1,8-octanediol diacrylate, 1,10-decanediol diacrylate, polybutadiene diacrylate, etc..

The acrylate monomers for example are present in an amount of 0 to 99%, 1% to 99%, 10% to 99%, 50% to 99%, 60% to about 99% by weight, e.g. 70% or 75% by weight. The molecular weight of the acrylate monomers ranges from about 300 to 15000, e.g. 300 to 5000 or 300 to 3000.

Further, vinyl monomers may be present in the release composition, for example in an amount of about 1% to about 30%, 1% to 25% or 1% to 20% by weight. The molecular weight of the vinyl monomers ranges from about 300 to 15000, e.g. 300 to 5000 or 10000, or 300 to 3000.
Various vinyl ethers can be included in the coating compositions of the present invention, and these include ethers containing one or more vinyl groups. The vinyl ethers for example copolymerize with the acrylates and provide low viscosity properties to the mixtures and flexibility to the cured coating compositions. Specific examples of useful vinyl ethers include ethyl vinyl ether, butyl vinyl ether, hydroxy butyl vinyl ether, cyclohexyl vinyl ether, 2-ethylhexyl vinyl ether, octyl vinyl ether, decyl vinyl ether, dodecyl vinyl ether, octadecyl vinyl ether, cyclohexane dimethanol monovinyl ether, phenyl vinyl ether, 1,6-hexanediol divinyl ether, 1,4-cyclohexane dimethanol divinyl ether, diethylene glycol divinyl ether, triethylene glycol divinyl ether, tetraethylene glycol divinyl ether, dipropylene glycol divinyl ether, tripropylene glycol divinyl ether, tetrapropylene glycol divinyl ether, and the propenyl ether of propylene carbonate. Ethers with more than one vinyl group such as 1-hexanediol divinyl ether, 1,4-cyclohexane dimethanol divinyl ether, diethylene glycol divinyl ether, triethylene glycol divinyl ether, tetraethylene glycol divinyl ether, dipropylene glycol divinyl ether, tripropylene glycol divinyl ether and tetrapropylene glycol divinyl ether are preferred.
Examples of suitable polyfunctional acrylate oligomers useful in radiation-curable compositions include the following types of acrylates: aliphatic polyether urethane acrylates, diacrylates and polyacrylates; aliphatic polyester urethane acrylates, diacrylates and polyacrylates; aromatic polyether urethane acrylates, diacrylates and polyacrylates; aromatic polyester urethane acrylates, diacrylates and polyacrylates; polyester acrylates, diacrylates and polyacrylates; polyether acrylates, diacrylates and polyacrylates; epoxy acrylates, diacrylates and polyacrylates; polyamine acrylates, diacrylates and polyacrylates; and acrylated acrylic oligomers.
Acrylates are generally preferred over methacrylates.

Suitable to be used in admixture with the silicon comprising component (d) are also the monomers as described above in connection with step (b).

The release coating compositions of the present invention also may contain up to about 10% by weight of a thickener. Any thickener which is compatible with the release coating composition and which is effective in thickening the composition can be utilized. The presence of a thickener is especially preferred when the composition is to be used on porous substrates, e.g. paper. Suitable are organic thickeners as well as inorganic thickeners. Examples of organic thickeners include cellulose-type thickeners which are known in the art. Examples of inorganic thickeners are the various commercially available silica thickeners, including hydrophilic silicas and hydrophobic silicas. Hydrophobic amorphous fume silicas are particularly preferred as the thickening additive. Examples are AEROSIL R-972 and AEROSIL R-974 from Degussa Corporation, Akron, Ohio.

The layer according to step (d) in the process of the present invention for example also comprises further additives and e.g. one or more solvents, including water. Suitable are for example the solvents as described above for step (b).

Curing of the release layer (d1) is for example effected by exposure to electromagnetic waves as described for step (b). However, curing may also be performed by elevated temperatures, using appropriate catalysts for radical polymerizations as already mentioned above. The curing temperatures for example are in the range of from 0°C to 200°C, e.g. from 0°C to 150°C or from 20°C to 150°C, from 20°C to 100°C or from 20°C to 80°C.

Other interesting Si and/or fluorine containing components that are subject of the silicon release layer are such that comprise an epoxy or a vinylether functional group, especially an epoxy functional group. The siloxane, is for example further substituted and the epoxy or vinylether functional group is part of substituent R₁ to R₄.

Accordingly, of interest are formulations wherein the compounds of the formula I
(d2) at least one of R₁, R₂, R₃ or R₄ comprises a group 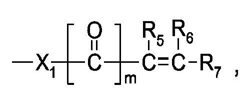 wherein m is
0 and X₁ is O or C₁-C₁₂-alkylene, or comprises a group 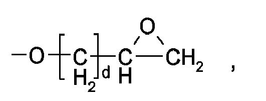 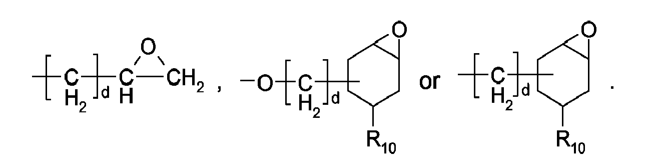 That is, in one embodiment of the invention in the process as described above, a silicon and/or fluorine containing composition, comprising
(d2) a siloxane having terminal epoxy or vinylether functional groups, optionally in the presence of a cationic photoinitiator or a thermal cationic initiator, and optionally diluted in a solvent, is applied on top of the adhesion layer to form a release layer, and the release layer is optionally dried and/or treated thermally and/or with electromagnetic waves.

The release layer compositions (d2) optionally also comprise further components as described for the release layer compositions (d1), i.e. acrylate monomers, vinyl monomers/oligomers, curing catalysts, in particular photoinitiators and/or thickeners.
The fluorine containing compound (d2) corresponds to the one as described for (d1).

Curing of the silicon-release formulation is for example effected thermally or by exposure to radiation. The conditions for the thermal and radiation curing correspond to the ones as given above. However, as the curing mechanism is not a radical, but a cationic curing mechanism, the kind of photoinitiator in case of the radiation curing is different. Suitable are cationic photoinitiators, such as for example benzoyl peroxide (other suitable peroxides are described in US 4 950 581, column 19, lines 17-25), or aromatic sulfonium, phosphonium or iodonium salts, such as are described, for example, in US 4 950 581, column 18, line 60 to column 19, line 10 or oxime esters.
Examples of such cationic photoinitiators are the compounds of the formulae VI, VII, VIII, IX, X, XI, XII and XIII: 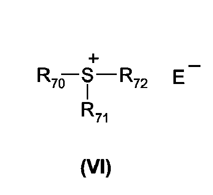 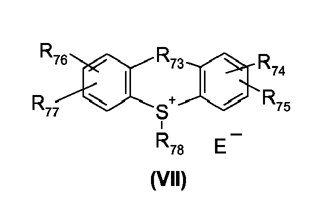 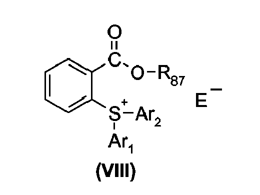 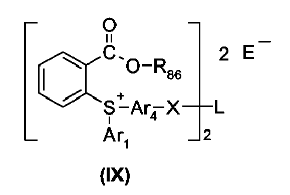 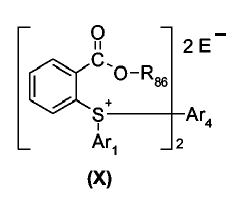 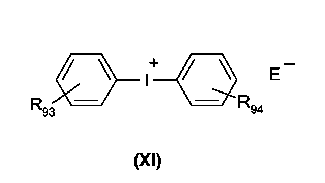 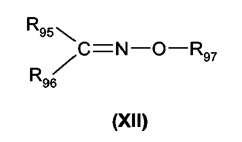 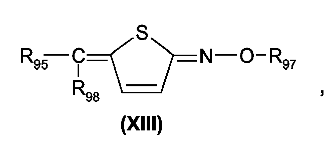 wherein
**R₇₀, R₇₁** and **R₇₂** are each independently of the others unsubstituted phenyl, or phenyl substituted by -S-phenyl or by 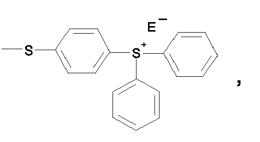 **R₇₃** is a direct bond, S, O, CH₂, (CH₂)₂, CO or NR₇₉;
**R₇₄, R₇₅, R₇₆** and **R₇₇** independently of one another are H, C₁-C₂₀alkyl, C₃-C₈cycloalkyl, C₁-C₂₀alkoxy, C₂-C₂₀alkenyl, CN, OH, halogen, C₁-C₆alkylthio, phenyl, naphthyl, phenyl-C₁-C₇alkyl, naphtyl-C₁-C₃alkyl, phenoxy, naphthyloxy, phenyl-C₁-C₇alkyloxy, naphtyl-C₁-C₃alkyloxy, phenyl-C₂-C₆alkenyl, naphthyl-C₂-C₄alkenyl, S-phenyl, (CO)R₇₉, O(CO)R₇₉, (CO)OR₇₉, SO₂R₇₉, OSO₂R₇₉;
**R₇₈** is C₁-C₂₀alkyl, C₁-C₂₀hydroxyalkyl, 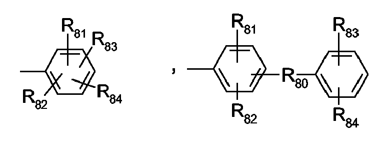 or 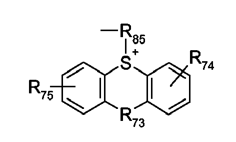 **R₇₉** is H, C₁-C₁₂alkyl, C₁-C₁₂hydroxyalkyl, phenyl, naphthyl or biphenylyl;
**R₈₀** is a direct bond, S, O or CH₂;
**R₈₁, R₈₂, R₈₃** and **R₈₄** independently of one another have one of the meanings as given for R₇₄; or R₈₁ and R₈₃ are joined to form a fused ring system with the benzene rings to which they are attached;
**R₁₀₂** is 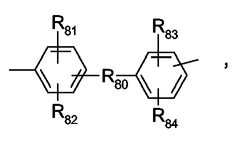 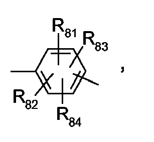 **R₈₆** is hydrogen, C₁-C₂₀alkyl; C₂-C₂₀alkyl interrupted by one or more O; is -L-M-R₈₈ or -L-R₈₈;
**R₈₇** has one of the meanings as given for R₈₆ or is 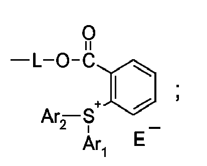 **R₈₈** is a monovalent sensitizer or photoinitiator moiety;
**Ar₁** and **Ar₂** independently of one another are phenyl unsubstituted or substituted by C₁-C₂₀alkyl, halogen or OR₈₉;
or are unsubstituted naphthyl, anthryl, phenanthryl or biphenylyl;
or are naphthyl, anthryl, phenanthryl or biphenylyl substituted by C₁-C₂₀alkyl, OH or OR₈₉;
or are -Ar₄-A-Ar₃ or 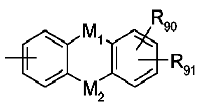 **Ar₃** is unsubstituted phenyl, naphthyl, anthryl, phenanthryl or biphenylyl;
or is phenyl, naphthyl, anthryl, phenanthryl or biphenylyl substituted by C₁-C₂₀alkyl, OR₈₉ or benzoyl;
**Ar₄** is phenylene, naphthylene, anthrylene or phenanthrylene;
**A** is a direct bond, S, O or C₁-C₂₀alkylene;
**X** is CO, C(O)O, OC(O), O, S or NR₈₉ ;
**L** is a direct bond, S, O, C₁-C₂₀alkylene or C₂-C₂₀alkylene interrupted by one or more O;
**R₈₉** is C₁-C₂₀alkyl or C₁-C₂₀hydroxyalkyl; or is C₁-C₂₀alkyl substituted by O(CO)R₉₂;
**M₁** is S, CO or NR₃;
**M₂** is a direct bond, CH₂, O or S;
**R₉₀** and **R₉₁** independently of one another are hydrogen, halogen, C₁-C₈alkyl, C₁-C₈alkoxy or phenyl;
**R₉₂** is C₁-C₂₀alkyl;
**R₉₃** and **R₉₄** are each independently of the other hydrogen, C₁-C₂₀alkyl, C₁-C₂₀alkoxy, OH-substituted C₁-C₂₀alkoxy, halogen, C₂-C₁₂alkenyl, cycloalkyl, especially methyl, isopropyl or isobutyl;
**E** is an anion, especially PF₆, SbF₆, AsF₆, BF₄, (C₆F₅)₄B, Cl, Br, HSO₄, CF₃-SO₃, F-SO₃, 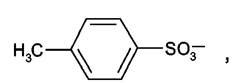 CH₃-SO₃, ClO₄, PO₄ NO₃, SO₄ CH₃-SO_{4,} 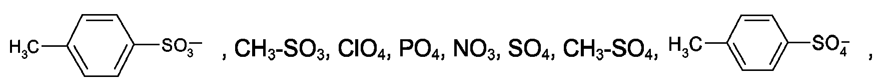 **R₉₅** is 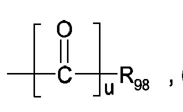 (CO)O-C₁-C₄alkyl, CN or C₁-C₁₂haloalkyl;
**R₉₆** has one of the definitions given for R₉₅ or is 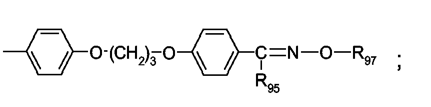 **R₉₇** is C₁-C₁₈alkylsulfonyl, C₁-C₁₀haloalkylsulfonyl, camphorylsulfonyl, phenyl-C₁-C₃alkylsulfonyl, C₃-C₃₀cycloalkylsulfonyl, phenylsulfonyl, naphthylsulfonyl, anthracylsulfonyl or phenanthrylsulfonyl, the groups cycloalkyl, phenyl, naphthyl, anthracyl and phenanthryl of the radicals C₃-C₃₀cycloalkylsulfonyl, phenyl-C₁-C₃alkylsulfonyl, phenylsulfonyl, naphthylsulfonyl, anthracylsulfonyl and phenanthrylsulfonyl being unsubstituted or substituted by one or more halogen, C₁-C₄haloalkyl, CN, NO₂, C₁-C₁₆alkyl, phenyl, C₁-C₄alkylthio, C₁-C₄alkoxy, phenoxy, C₁-C₄alkyl-O(CO)-, C₁-C₄alkyl-(CO)O-, R₁₀₇OSO₂- and/or -NR₁₀₀R₁₀₁ substituents; or R₉₇ is
C₂-C₆haloalkanoyl, halobenzoyl, 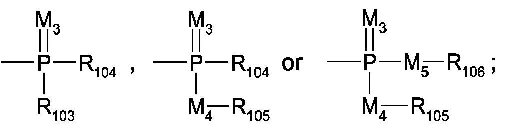 **M₃, M₄** and **M₅** are each independently of the others O or S;
**u** is 0 or 1;
**R₉₈** is C₁-C₁₂alkyl, cyclohexyl, camphoryl, unsubstituted phenyl, or phenyl substituted by one or more halogen, C₁-C₁₂alkyl, OR₉₉, SR₉₉ or NR₁₀₀R₁₀₁ substituents;
**R₉₉** is C₁-C₁₂alkyl, phenyl, phenyl-C₁-C₄alkyl or C₁-C₁₂hydroxyalkyl;
**R₁₀₀** and **R₁₀₁** are each independently of the other hydrogen, C₁-C₄alkyl, C₂-C₆hydroxyalkyl, or R₁₀₀ and R₁₀₁, together with the N atom to which they are bonded, form a 5- or 6-membered ring, which may also contain O atoms or an NR₁₀₂ group;
**R₁₀₂** is hydrogen, phenyl, phenyl-C₁-C₄alkyl, C₁-C₁₂alkyl or C₂-C₅hydroxyalkyl;
**R₁₀₃, R₁₀₄, R₁₀₅** and **R₁₀₆** are each independently of the others C₁-C₆alkyl, C₁-C₆haloalkyl; or phenyl unsubstituted or substituted by C₁-C₄alkyl or by halogen; and
**R₁₀₇** is hydrogen, C₁-C₄alkyl, phenyl or tolyl.

Suitable sulfonium salts are obtainable, for example, under the trade names ^{®}Cyracure UVI-6990, ^{®}Cyracure UVI-6974 (Union Carbide), ^{®}Degacure Kl 85 (Degussa), SP-55, SP-150, SP-170 (Asahi Denka), GE UVE 1014 (General Electric), SarCat^{®} KI-85 (= triarylsulfonium hexafluorophosphate; Sartomer), SarCat^{®} CD 1010 (= mixed triarylsulfonium hexafluoroantimonate; Sartomer); SarCat^{®} CD 1011 (= mixed triarylsulfonium hexafluorophosphate; Sartomer).
Suitable iodonium salts are e.g. tolylcumyliodonium tetrakis(pentafluorophenyl)borate, 4-[(2-hydroxy-tetradecyloxy)phenyl]phenyliodonium hexafluoroantimonate or hexafluorophosphate (SarCat^{®} CD 1012; Sartomer), tolylcumyliodonium hexafluorophosphate, 4-isobutylphenyl-4'-methylphenyliodonium hexafluorophosphate (IRGACURE^{®} 250, Ciba Specialty Chemicals), 4-octyloxyphenyl-phenyliodonium hexafluorophosphate or hexafluoroantimonate, bis(dodecylphenyl)iodonium hexafluoroantimonate or hexafluorophosphate, bis(4-methylphenyl)-iodonium hexafluorophosphate, bis(4-methoxyphenyl)iodonium hexafluorophosphate, 4-methylphenyl-4'-ethoxyphenyliodonium hexafluorophosphate, 4-methylphenyl-4'-dodecylphenyliodonium hexafluorophosphate, 4-methylphenyl-4'-phenoxyphenyliodonium hexafluorophosphate. Of all the iodonium salts mentioned, compounds with other anions are, of course, also suitable. The preparation of iodonium salts is known to the person skilled in the art and described in the literature, for example US 4151175, US 3862333, US 4694029, EP 562897, US 4399071, US 6306555, WO 98/46647 J. V. Crivello, "Photoinitiated Cationic Polymerization" in: UV Curing: Science and Technology, Editor S. P. Pappas, pages 24-77, Technology Marketing Corporation, Norwalk, Conn. 1980, ISBN No. 0-686-23773-0; J. V. Crivello, J. H. W. Lam, Macromolecules, 10, 1307 (1977) and J. V. Crivello, Ann. Rev. Mater. Sci. 1983, 13, pages 173-190 and J. V. Crivello, Journal of Polymer Science, Part A: Polymer Chemistry, Vol. 37, 4241-4254 (1999).
Specific examples of oximeesters are α-(octylsulfonyloxyimino)-4-methoxybenzylcyanide, 2-methyl-α-[5-[4-[[methyl-sulfonyl]oxy]imino]-2(5H)-thienylidene]-benzeneacetonitrile, 2-methyl-α-[5-[4-[[(n-propyl)sulfonyl]oxy]imino]-2(5H)-thienylidene]-benzeneacetonitrile, 2-methyl-α-[5-[4-[[(camphoryl)sulfonyl]oxy]imino]-2(5H)-thienylidene]-benzeneacetonitrile, 2-methyl-α-[5-[4-[[(4-methylphenyl)sulfonyl]oxy]imino]-2(5H)-thienylidene]-benzeneacetonitrile, 2-methyl-α-[5-[4-[[(n-octyl)sulfonyl]oxy]imino]-2(5H)-thienylidene]-benzeneacetonitrile, 2-methyl-α-[5-[[[[4-[[(4-methylphenyl)sulfonyl]oxy]phenyl]sulfonyl]oxy]imino]-2(5H)-thienylidene]-benzeneacetonitrile, 1,1'-[1,3-propanediylbis(oxy-4,1-phenylene)]bis[2,2,2-trifluoro-bis[O-(trifluoromethylsulfonyl)oxime]-ethanone, 1,1'-[1,3-propanediylbis(oxy-4,1-phenylene)]bis[2,2,2-trifluoro-bis[O-(propylsulfonyl)oxime]-ethanone, 1,1'-[1,3-propanediylbis(oxy-4,1-phenylene)]bis[2,2,2-trifluoro-bis[O-((4-methylphenyl)sulfonyl)oxime]-ethanone,
2-[2,2,3,3,4,4,5,5,6,6,7,7-dodecafluoro-1-(nonafluorobutylsulfonyloxyimino)-heptyl]-fluorene, 2-[2,2,3,3,4,4,4-heptafluoro-1-(nonafluorobutylsulfonyloxyimino)-butyl]-fluorene, 2-[2,2,3,3,4,4,5,5,6,6,7,7-dodecafluoro-1-(nonafluorobutylsulfonyloxyimino)-heptyl]-9-thiafluorene, α-(methylsulfonyloxyimino)-4-methoxybenzylcyanide, α-(methylsulfonyloxyimino)-3-methoxybenzylcyanide, α-(methylsulfonyloxyimino)-3,4-dimethylbenzylcyanide, α-(methylsulfonyloxyimino)-thiophene-3-acetonitrile, α-(isopropylsulfonyloxyimino)-thiophene-2-acetonitrile, cis/trans-α-(dodecylsulfonyloxyimino)-thiophene-2-acetonitrile.
Suitable oximesulfonates and their preparation can be found, for example, in WO 00/10972, WO 00/26219, GB 2348644, US 4450598, WO 98/10335, WO 99/01429, EP 780729, EP 821274, US 5237059, EP 571330, EP 241423, EP 139609, EP 361907, EP 199672, EP 48615, EP 12158, US 4136055, WO 02/25376, WO 02/98870, WO 03/067332 and WO 04/074242.

Of interest also are formulations wherein the compounds of the formula I
(d3) at least one of R₁, R₂, R₃ or R₄ comprises an olefinic group and at least one of R₁, R₂, R₃ or R₄ is hydrogen, wherein the Si-H group and the olefinic group are located in the same or different organopolysiloxane chains of the molecule or in different molecules.
   The crosslinking takes place between different molecules 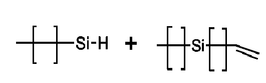 or e.g. 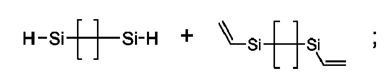 or the crosslinking is performed inter- / intramolecular 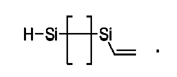 That is, in one embodiment of the invention in the process as described above, a silicon and/or fluorine containing composition, comprising
   (d3) a siloxane having terminal alkenyl groups and a siloxane having Si-H groups, in the presence of a hydrosilylation catalyst, optionally diluted in a solvent, is applied on top of the adhesion layer to form a release layer, and the release layer is optionally dried and/or treated thermally.

Suitably the thermal treatment is carried out at temperatures from 0°C to 200°C, e.g. 20°C to 200°C or 40°C to 200°C, for example 40°C to 180°C, or 60°C to 180°C, such as 60°C to 150°C or 60°C to 120°C, depending on the substrate.
Preferably in this embodiment the curing is effected thermally.
Suitably the ratio of the total number of Si-H groups in the composition to olefinic groups in the composition is for example from 1:99 to 99:1, 10:90 to 90:10, 30:70 to 70:30, in particular from 1.2:1 to 2:1.
Suitable hydrosilylation catalysts include complexes or compounds of group VIII metals, for example, platinum, ruthenium, rhodium, palladium, osmium and indium. Preferred catalysts are platinum or rhodium compounds or complexes including chloroplatinic acid, platinum acetylacetonate, complexes of platinous halides with unsaturated compounds, for example, ethylene, propylene, organovinylsiloxanes and styrene, hexamethyldiplatinum, PtCl₂, PtCl₃ and Pt(CN)₃. Alternatively, the catalyst is a rhodium complex, for example RhCl₃(Bu₂S)₃.
The composition optionally comprises inhibitors to prevent the cure of the coating composition below a predetermined temperature. Examples of suitable inhibitors include ethylenically or aromatically unsaturated amides, acetylenic compounds, ethylenically unsaturated isocyanates, olefinic siloxanes, unsaturated hydrocarbon diesters, conjugated eneynes, hydroperoxides, nitriles and diaziridines, specific examples include methyl butynol, dimethyl hexynol or ethynyl cyclohexanol, trimethyl(3,5-dimethyl-1-hexyn-3-oxy)silane, a maleate for example, bis(2-methoxy-1-methylethyl)maleate, a fumarate e.g. diethylfumarate or a fumarate/alcohol mixture wherein the alcohol is, for example, benzyl alcohol or 1-octanol and ethenyl cyclohexyl-1-ol.
The release coating composition is preferably substantially solventless, but can alternatively be a solution in an organic solvent, for example a solution in a hydrocarbon solvent such as xylene or toluene at a concentration of for example 4 to 50% by weight.
Other constituents which may also be added to release coating compositions include, for example, silicone release modifiers, bath life extenders such as an alcohol, fillers, reactive diluents, adhesion promoters, solvents, fragrances, preservatives and fillers, for example, silica, quartz and chalk. The person skilled in the art is familiar with said additives.
Further, the composition optionally comprises an aminoalkyl siloxane (e.g. in an amount of 0.1% to 20%, preferably from 1% to 5 % by weight). The use of an aminoalkyl siloxane in the composition typically requires the elevation of the curing temperature of the formulation (e.g. 80°C to 180°C).

Examples for release layer compositions of this kind are given in WO 02/06404, the disclosure of which is incorporated herein by reference.

Of interest also are formulations wherein the compounds of the formula I
(d4) at least two of R₁, R₂, R₃ or R₄ are selected from C₁-C₁₀alkoxy, OH, CₚF₂ₚ₊₁ and halogen; or at least one of R₁, R₂, R₃ or R₄ is selected from C₁-C₁₀alkoxy and OH and at least one of R₁, R₂, R₃ or R₄ is CₚF₂ₚ₊₁ or halogen.

That is, in one embodiment of the invention in the process as described above, a silicon and/or fluorine containing composition, comprising
(d4) a siloxane having terminal groups OH, C₁-C₂₀-alkoxy or Cl, optionally in the presence of a catalyst, (e.g. a tin complex), and optionally diluted in a solvent and other additives as described above, is applied on top of the adhesion layer to form a release layer, and the release layer is optionally dried and/or treated thermally (e.g. as described in patent US 4261876 as well as the release layer (d3) above.

A preferred process according to the invention therefore comprises compounds of formula I,
wherein
n is 1 to 1000;
R₁, R₂, R₃ and R₄ independently of one another are hydrogen, -(CH₂)₃-X, -OH, Cl, phenyl;
C₁-C₂₀alkyl; C₁-C₂₀alkyl substituted by one or more group(s) selected from X, OH, phenyl and Y;
C₂-C₅₀alkyl interrupted by one or more O; C₂-C₅₀alkyl interrupted by one or more O and substituted by one or more group(s) selected from X, OH, phenyl and Y;
C₂-C₂₀alkenyl; C₂-C₂₀alkenyl substituted by one or more group(s) selected from X, OH, C₁-C₁₀alkoxy, phenyl and Y;
C₃-C₂₀alkenyl interrupted by one or more O; C₃-C₂₀alkenyl interrupted by one or more O and substituted by one or more group(s) selected from X, OH, C₁-C₁₀alkoxy, phenyl and Y;
C₁-C₂₀alkoxy; C₁-C₂₀alkoxy substituted by one or more group(s) selected from X, C₂-C₁₀alkenyl, OH, phenyl and Y;
C₂-C₅₀alkoxy interrupted by one or more O; C₂-C₅₀alkoxy interrupted by one or more O and substituted by one or more group(s) selected from X, C₂-C₁₀alkenyl, OH, phenyl and Y;
Y is 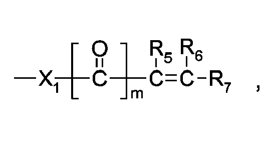 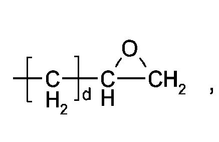 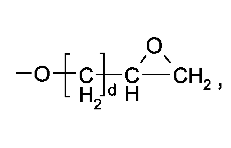 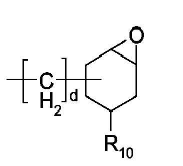 or 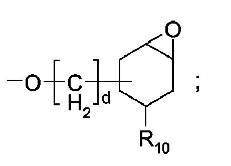 m is 0 or 1;
d is an integer from 0 to 10;
X is hydrogen, halogen, OR₈, NR₈R₉, SR₈, CN, NCO, COOR₈, OCOR₈, CONR₈R₉, NR₈COR₉, OCOOR₈, OCONR₈R₉, NR₈COOR₉ or Y;
X₁ is O, NR₈ or C₁-C₁₂alkylene;
R₅, R₆ and R₇ independently of one another are hydrogen or C₁-C₆alkyl;
R₈ and R₉ independently of one another are hydrogen, C₁-C₂₀alkyl, phenyl-C₁-C₄alkyl, phenyl, naphthyl or biphenylyl;
R₁₀ is hydrogen or C₁-C₁₀alkyl;
provided that
(d1) at least one of R₁, R₂, R₃ or R₄ comprises a group 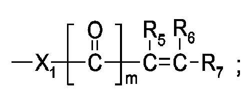 or
(d2) at least one of R₁, R₂, R₃ or R₄ comprises a group 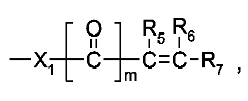 wherein m is 0 and X₁ is O, or comprises a group 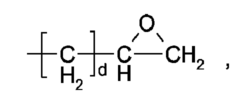 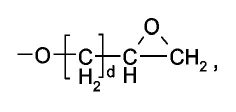 or
(d3) at least one of R₁, R₂, R₃ or R₄ comprises an olefinic group and at least one of R₁, R₂, R₃ or R₄ is hydrogen, wherein the Si-H group and the olefinic group are located in one or different organopolysiloxane chains of the molecule or in different molecules; or
(d4) at least two of R₁, R₂, R₃ or R₄ are selected from C₁-C₁₀ Alkoxy, OH or Cl, or at least one of R₁, R₂, R₃ or R₄ is selected from C₁-C₁₀ Alkoxy, OH and at least one of R₁, R₂, R₃ or R₄ is Cl; or
(d5) the silicon containing layer comprises any mixtures of compounds according to (d1), (d2), (d3) or (d4).

The fluorine containing compounds for example are polysiloxanes of the formula I, wherein R₁ is F or CₚF₂ₚ₊₁ or is substituted by a CₚF₂ₚ₊₁ moiety. p denotes for example an integer from 1 to 24, 4 to 24, 8 to 24 or 8 to 18.
The fluorine containing compound for example as well is a compound, in particular a monomer, which in addition to a polymerizable group (e.g. acrylate, vinyl, epoxy) also has a substituent CₚF₂ₚ₊₁; or which in addition to a polymerizable group bears a substituent containing a CₚF₂ₚ₊₁-moiety; or which in addition to a polymerizable group comprises a CₚF₂ₚ-moiety if the fluorine containing moiety is a bridge between two non fluorinated parts of a monomer.
Preferred are compounds not containing fluorine.
Accordingly, subject of the invention is a process as described above, wherein the silicon and/or fluorine containing layer (d) is a silicon containing layer, that is, the layer prepared in step (d) of the process according to the invention does not comprise fluorine.

The person skilled in the art is familiar with the preparation of the compounds/compositions for the release layer. Said layers are known from the literature, e.g. the patents cited above and many suitable components are commercially available, e.g. Tego RC902 (Degussa), Tego RC711 (Degussa), TEGO RC726 (Degussa), Ebecryl 350 (UCB), UV 9315 (General Electric), SYL-OFF 7937 (Dow Corning).

The release layers that are preferred in the process according to the invention are formed by photocurable, in particular radically photocurable, compositions.
In the context of the present invention release layers comprising compounds as described under items (d1), (d2) and (d3) are preferred, in particular preferred are (d1) and (d2), especially (d1).

The curing/crosslinking of component (d), i.e. (d1), (d2), (d3) and (d4) is effected by drying and/or thermal treatment and/or by exposure to electromagnetic waves. The drying, thermal treatment and irradiation in step (d) are for example performed as is described above in connection with step (c). Preferred are processes where the silicon containing layer contains no solvents.
The photochemical radical curing in step (d1) is done preferably under nitrogen atmosphere with an oxygen content less than 1000, 500, 100, 50, 30 ppm.

The silicon release coating (layer) prepared according to the process of the present invention adheres to the adhesive coating with sufficient strength to withstand the forces normally encountered in handling and manipulating the composites, while the adhesive coating is a stable linking layer between the substrate and the release layer. At the same time the silicone release coating (layer) separates cleanly from the adhesive coating (layer) without requiring excessively high peeling forces that might tear or otherwise rupture the substrate, in particular paper substrates.
Silicon based release coatings in general are useful as backing for adhesives of e.g. labels, RFID-labels, diapers, tapes etc.. Single sided liners, for example, backing sheets for pressure sensitive adhesive labels, are usually adapted to temporarily retain the labels without affecting the adhesive properties of the labels. Double sided liners, for example interleaving papers for double sided and transfer tapes, are used to ensure the protection and desired unwind characteristics of a double sided self-adhesive tape or adhesive film. The release coating is required to adhere well to the liner while having relatively low adhesion to the adhesive so that the label can be removed from the liner by a predetermined peel force.

The materials coated via the process according to the present invention may also be used as water-repellent, chemical repellent, anti-graphiti or hydrophobic materials, as the final silicon and/or fluorine containing layer exhibits said properties.
Subject of the invention therefore also is a coated material, wherein the silicon and/or fluorine containing layer (iii) is used as super-hydrophobic, hydrophobic, chemical repellent, anti-graphiti or water repellent surface; as well as a process, wherein the silicon and/or fluorine containing layer (d) forms a super-hydrophobic, hydrophobic, chemical repellent, anti-graphiti or water repellent surface.

The examples which follow illustrate the invention in more detail, without restricting the scope to said examples only. Parts and percentages are, as in the remainder of the description and in the claims, by weight, unless stated otherwise. Where in the examples alkyl radicals having more than three carbon atoms are referred to without any mention of specific isomers, the n-isomers are meant in each case.

### Example 1:

A BOPP foil (thickness 50 microns, Label-Lyte LL 210; commercially available from Exxon Mobil) is pre-treated with corona (3 m/min 500 W). Then a 1% solution in isopropanol of a 1:1 mol-equivalent mixture of 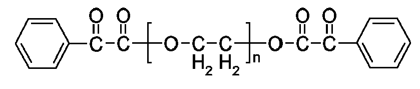 and 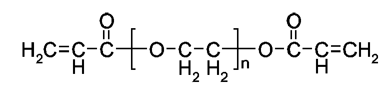 is applied (n is approximately 14 as in commercial polyethyleneglykole 600), using a 4 micron wire bar. The solvent is evaporated and the remaining adhesion layer is cured under a medium pressure mercury lamp, 120 W/cm at a speed of 50 m/min. On top of this adhesion layer, a silicon release layer, comprising two siloxanes containing acrylate groups are mixed in the ratio 70:30 (Tego RC 902 and Tego RC 711, commercially available from Goldschmidt/Degussa), and 2.5% by weight of the photoinitiator 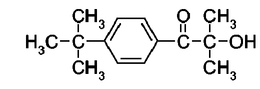 are added. The mixture is applied in a thickness of 1 micron on the pre-treated BOPP foil and cured with UV-light under nitrogen (remaining oxygen below 100 ppm). This silicon release layer prepared according to the process of the invention shows an excellent adhesion on the BOPP substrate and an excellent release effect against a TESA-tape 7476 commercially available from Beiersdorf.

## Claims

1. Process for the preparation of a silicon layer on an inorganic or organic substrate, wherein
(a) the substrate is subjected to a plasma-, corona-, flame- or ozonization treatment;
(b) an adhesion promoting composition is applied to the inorganic or organic substrate, and
(c) using suitable methods the adhesion-promoting composition is optionally dried and is irradiated with electromagnetic waves to form an adhesion layer, and
(d) a silicon and/or fluorine containing composition, optionally diluted in a solvent, is applied on top of the adhesion layer to form a release layer, and the release layer is optionally dried and/or treated thermally and/or with electromagnetic waves.

2. Process according to claim 1, wherein the adhesion promoting composition in step (b) comprises one or more photoinitiators, or mixtures of photoinitiator(s) with monomer(s) or/and oligomer(s) containing at least one ethylenically unsaturated group, or solutions, suspensions or emulsions of the afore-mentioned substances.

3. Process according to claim 1, wherein a silicon and/or fluorine containing composition, comprising
(d1) a siloxane having terminal alkenyl groups, optionally in the presence of a radical photoinitiator and/or thermal radical initiator, optionally diluted in a solvent, is applied on top of the adhesion layer to form a release layer, and the release layer is optionally dried and/or treated thermally and/or with electromagnetic waves.

4. Process according to claim 1, wherein a silicon and/or fluorine containing composition, comprising
(d2) a siloxane having terminal epoxy or vinylether functional groups, optionally in the presence of a cationic photoinitiator or a thermal cationic initiator, and optionally diluted in a solvent, is applied on top of the adhesion layer to form a release layer, and the release layer is optionally dried and/or treated thermally and/or with electromagnetic waves.

5. Process according to claim 1, wherein a silicon and/or fluorine containing composition, comprising
(d3) a siloxane having terminal alkenyl groups and a siloxane having Si-H groups, in the presence of a hydrosilylation catalyst, optionally diluted in a solvent, is applied on top of the adhesion layer to form a release layer, and the release layer is optionally dried and/or treated thermally.

6. Process according to claim 1, wherein a silicon and/or fluorine containing composition, comprising
(d4) a siloxane having terminal groups OH, C₁-C₂₀-alkoxy or Cl, optionally in the presence of a catalyst, and optionally diluted in a solvent, is applied on top of the adhesion layer to form a release layer, and the release layer is optionally dried and/or treated thermally.

7. Process according to claim 1, wherein the silicon and/or fluorine containing layer (d) comprises a compound of the formula I, 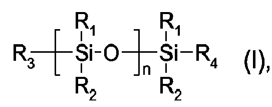 wherein
**n** is 1 to 1000;
**R₁, R₂, R₃ and R₄** independently of one another are C₁-C₂₀alkyl; C₁-C₂₀alkyl substituted by one or more group(s) selected from X, OH, CₚF₂ₚ₊₁, phenyl and Y;
C₂-C₅₀alkyl interrupted by one or more O; C₂-C₅₀alkyl interrupted by one or more O and substituted by one or more group(s) selected from X, CₚF₂ₚ₊₁, OH, phenyl and Y;
C₂-C₂₀alkenyl; C₂-C₂₀alkenyl substituted by one or more group(s) selected from X, CₚF₂ₚ₊₁, OH, C₁-C₁₀alkoxy, phenyl and Y;
C₃-C₂₀alkenyl interrupted by one or more O; C₃-C₂₀alkenyl interrupted by one or more O and substituted by one or more group(s) selected from X, CₚF₂ₚ₊₁, OH, C₁-C₁₀alkoxy, phenyl and Y;
phenyl; phenyl substituted by one or more group(s) selected from X, CₚF₂ₚ₊₁, C₁-C₁₀alkyl, C₂-C₁₀alkenyl, OH, C₁-C₁₀alkoxy and Y;
naphthyl; naphthyl substituted by one or more group(s) selected from X, CₚF₂ₚ₊₁, C₁-C₁₀alkyl, C₂-C₁₀alkenyl, OH, C₁-C₁₀alkoxy, phenyl and Y;
biphenylyl; biphenylyl substituted by one or more group(s) selected from X, CₚF₂ₚ₊₁, C₁-C₁₀alkyl, C₂-C₁₀alkenyl, OH, C₁-C₁₀alkoxy and Y;
C₁-C₂₀alkoxy; C₁-C₂₀alkoxy substituted by one or more group(s) selected from X, CₚF₂ₚ₊₁, C₂-C₁₀alkenyl, OH, phenyl and Y;
C₂-C₅₀alkoxy interrupted by one or more O; C₂-C₅₀alkoxy interrupted by one or more O and substituted by one or more group(s) selected from X, CₚF₂ₚ₊₁, C₂-C₁₀alkenyl, OH, phenyl and Y;
phenoxy; phenyloxy substituted by one or more group(s) selected from X, CₚF₂ₚ₊₁, C₁-C₁₀alkyl, C₂-C₁₀alkenyl, OH, C₁-C₁₀alkoxy and Y;
naphthyloxy; naphthyloxy substituted by one or more group(s) selected from X, CₚF₂ₚ₊₁, C₁-C₁₀alkyl, C₂-C₁₀alkenyl, OH, C₁-C₁₀alkoxy and Y;
biphenyloxy; biphenyloxy substituted by one or more group(s) selected from X, CₚF₂ₚ₊₁, C₁-C₁₀alkyl, C₂-C₁₀alkenyl, OH, C₁-C₁₀alkoxy and Y;
or R₁, R₂, R₃ and R₄ independently of one another are Y;
or the radicals R₃ and R₄ of different compounds of the formula (I) together form a C₃-C₅₀alkylene chain, which optionally is interrupted by one or more O and/or 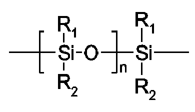 and which optionally is substituted by one or more R₁₀;
**Y** is 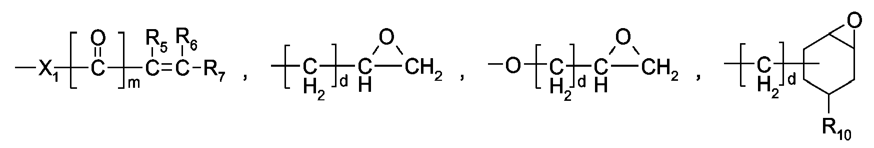 or 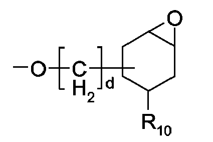 **p** is 1 to 24;
**m** is 0 or 1;
**d** is an integer from 0-10;
**X** is hydrogen, halogen, OR₈, NR₈R₉, SR₈, CN, NCO, COOR₈, OCOR₈, CONR₈R₉, NR₈COR₉, OCOOR₈, OCONR₈R₉, NR₈COOR₉ or Y;
**X₁** is O, NR₈ or C₁-C₁₂alkylene;
**R₅, R₆** and **R₇** independently of one another are hydrogen or C₁-C₆alkyl;
**R₈** and **R₉** independently of one another are hydrogen or R₁₁;
**R₁₀** is hydrogen or C₁-C₁₀alkyl;
**R₁₁** is C₁-C₂₀alkyl, phenyl-C₁-C₄alkyl, phenyl, naphthyl or biphenylyl; all of which optionally are substituted by one or more R₁₂;
**R₁₂** is hydrogen, halogen, OR₁₃, NR₁₃R₁₄, SR₁₃, CN, NCO, COOR₁₃, OCOR₁₄, CONR₁₃R₁₄, NR₁₃COR₁₄, OCOOR₁₃, OCONR₁₃R₁₄, NR₁₃COOR₁₄ or Y;
**R₁₃** and **R₁₄** independently of one another are hydrogen, C₁-C₂₀alkyl, phenyl-C₁-C₄alkyl, phenyl, naphthyl or biphenylyl;
provided that
(d1) at least one of R₁, R₂, R₃ or R₄ comprises a group 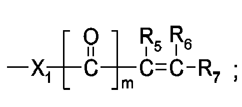 or
(d2) at least one of R₁, R₂, R₃ or R₄ comprises a group 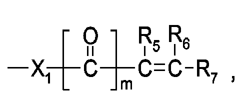 wherein m is
0 and X₁ is O, or comprises a group 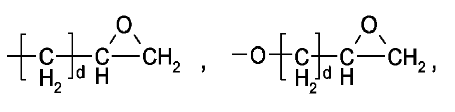 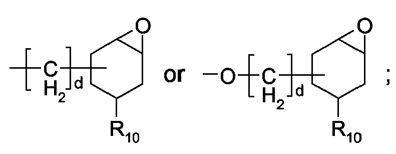 or
(d3) at least one of R₁, R₂, R₃ or R₄ comprises an olefinic group and at least one of R₁, R₂, R₃ or R₄ is hydrogen, wherein the Si-H group and the olefinic group are located in one or different organopolysiloxane chains of the molecule or in different molecules; or
(d4) at least two of R₁, R₂, R₃ or R₄ are selected from C₁-C₁₀alkoxy, OH, CₚF₂ₚ₊₁ and halogen, or
at least one of R₁, R₂, R₃ or R₄ is selected from C₁-C₁₀alkoxy and OH and at least one of R₁, R₂, R₃ or R₄ is CₚF₂ₚ₊₁ or halogen; or
(d5) the silicon and/or fluorine containing layer comprises any mixtures of compounds according to (d1), (d2), (d3) or (d4).

8. Process according to claim 1, wherein the adhesion promoting layer deposited in step (b) has a thickness up to 10 microns, preferably from a monomolecular layer to 5 microns.

9. Process according to claim 1, wherein the adhesion promoting layer after carrying out step (c), has a thickness ranging up to 1 micron, preferably from a monomolecular layer to 500 nm.

10. A coated material, comprising
(i) a plasma-, corona-, flame- or ozonization-pre-treated organic or inorganic substrate,
(ii) as a first layer an adhesion layer, obtained by radiation curing a composition comprising one or more photoinitiators, or mixtures of photoinitiators with monomers or/and oligomers containing at least one ethylenically unsaturated group; and
(iii) as a second layer a silicon and/or fluorine containing layer.

11. Process according to claim 1, wherein the silicon and/or fluorine containing layer (d) after optional drying and curing, has a thickness ranging up to 10 microns, preferably from a monomolecular layer to 5 microns.

12. Process according to anyone of claims 1 to 11, wherein the silicon and/or fluorine containing layer (d) is a silicon containing layer.

13. Process according to claim 7 wherein the compounds of formula I
**n** is 1 to 1000;
**R₁, R₂, R₃** and **R₄** independently of one another are hydrogen, -(CH₂)₃-X, -OH, Cl, phenyl;
C₁-C₂₀alkyl; C₁-C₂₀alkyl substituted by one or more group(s) selected from X, OH, phenyl and Y;
C₂-C₅₀alkyl interrupted by one or more O; C₂-C₅₀alkyl interrupted by one or more O and substituted by one or more group(s) selected from X, OH, phenyl and Y;
C₂-C₂₀alkenyl; C₂-C₂₀alkenyl substituted by one or more group(s) selected from X, OH, C₁-C₁₀alkoxy, phenyl and Y;
C₃-C₂₀alkenyl interrupted by one or more O; C₃-C₂₀alkenyl interrupted by one or more O and substituted by one or more group(s) selected from X, OH, C₁-C₁₀alkoxy, phenyl and Y;
C₁-C₂₀alkoxy; C₁-C₂₀alkoxy substituted by one or more group(s) selected from X, C₂-C₁₀alkenyl, OH, phenyl and Y;
C₂-C₅₀alkoxy interrupted by one or more O; C₂-C₅₀alkoxy interrupted by one or more O and substituted by one or more group(s) selected from X, C₂-C₁₀alkenyl, OH, phenyl and Y;
**Y** is 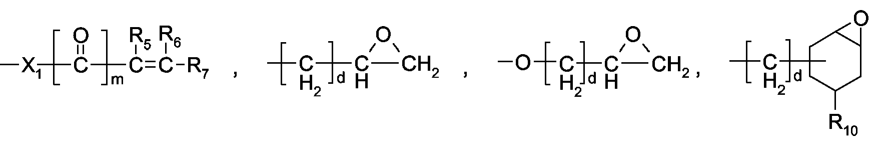 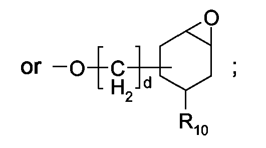 **m** is 0 or 1;
**d** is an integer from 0 to 10;
**X** is hydrogen, halogen, OR₈, NR₈R₉, SR₈, CN, NCO, COOR₈, OCOR₈, CONR₈R₉, NR₈COR₉, OCOOR₈, OCONR₈R₉, NR₈COOR₉ or Y;
**X₁** is O, NR₈ or C₁-C₁₂alkylene;
**R₅, R₆** and **R₇** independently of one another are hydrogen or C₁-C₆alkyl;
**R₈** and **R₉** independently of one another are hydrogen, C₁-C₂₀alkyl, phenyl-C₁-C₄alkyl, phenyl, naphthyl or biphenylyl;
**R₁₀** is hydrogen or C₁-C₁₀alkyl;
provided that
(d1) at least one of R₁, R₂, R₃ or R₄ comprises a group 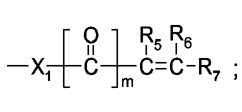 or
(d2) at least one of R₁, R₂, R₃ or R₄ comprises a group 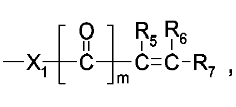 wherein m is
0 and X₁ is O, or comprises a group 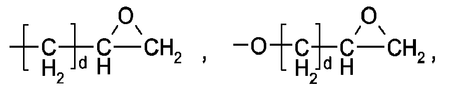 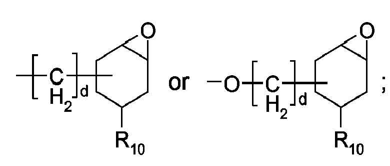 or
(d3) at least one of R₁, R₂, R₃ or R₄ comprises an olefinic group and at least one of R₁, R₂, R₃ or R₄ is hydrogen, wherein the Si-H group and the olefinic group are located in one or different organopolysiloxane chains of the molecule or in different molecules; or
(d4) at least two of R₁, R₂, R₃ or R₄ are selected from C₁-C₁₀ Alkoxy, OH or Cl, or at least one of R₁, R₂, R₃ or R₄ is selected from C₁-C₁₀ Alkoxy, OH and at least one of R₁, R₂, R₃ or R₄ is Cl; or
(d5) the silicon containing layer comprises any mixtures of compounds according to (d1), (d2), (d3) or (d4).

14. A coated material according to claim 10, wherein the silicon and/or fluorine containing layer (iii) is used as super-hydrophobic, hydrophobic, chemical repellent, anti-graphiti or water repellant surface.

15. A process according to claim, wherein the silicon and/or fluorine containing layer (d) forms a super-hydrophobic, hydrophobic, chemical repellent, anti-graphiti or water repellant surface.
